# EUROPEAN PATENT SPECIFICATION

(11) **EP 1 743 827 B1**
(45) Date of publication and mention of the grant of the patent: **19.01.2011**
(21) Application number: 06122620.5
(22) Date of filing: 13.06.2001
(51) Int. Cl.: B62D 25/12, B60R 21/34

(54) **Vehicular hood hinge structure**
Scharnierstruktur für Motorhaube
Structure de charnière pour capot de véhicule

(30) Priority: 15.06.2000 JP 2000179809; 23.06.2000 JP 2000189273; 12.10.2000 JP 2000311566
(43) Date of publication of application: 17.01.2007
(62) Divisional of application: 01114327.8
(73) Proprietor: Toyota Jidosha Kabushiki Kaisha, Toyota-shi, Aichi-ken, 471-8571 (JP); Pacific Industrial Co., Ltd., Ogaki-shi, Gifu-ken 503-8603 (JP)
(72) Inventor: Matuyama, Narihide, Toyota-shi Gifu 471-8571 (JP); Hamada, Makoto, Toyota-shi Aichi 471-8571 (JP); Hosoya, Toshiaki, Toyota-shi Aichi 471-8571 (JP); Mori, Shinji, Ogaki-shi Gifu 503-8603 (JP)
(74) Representative: TBK-Patent

(56) References cited:
- PATENT ABSTRACTS OF JAPAN vol. 1999, no. 04, 30 April 1999 (1999-04-30) -& JP 11 020740 A (NISSAN MOTOR CO LTD), 26 January 1999 (1999-01-26)
- PATENT ABSTRACTS OF JAPAN vol. 1998, no. 11, 30 September 1998 (1998-09-30) -& JP 10 152075 A (NISSAN MOTOR CO LTD), 9 June 1998 (1998-06-09)

## Description

### BACKGROUND OF THE INVENTION

### 1. Field of the Invention

The invention relates to a vehicular hood hinge structure and, more particularly, to a vehicular hood hinge structure for fitting a hood to a structural member of a vehicle such as an automobile or the like via hinge.

### 2. Description of Related Art

An example of a vehicular hood hinge structure for fitting a hood to a structural member of a vehicle such as an automobile or the like is disclosed in Japanese Patent Application Laid-Open No. HEI 11-99966.

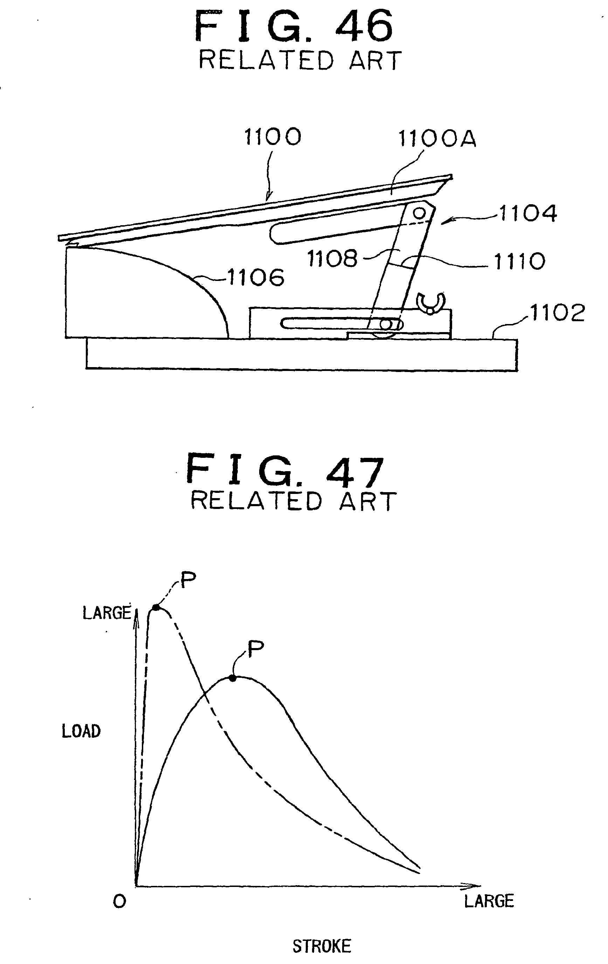

As shown in Fig. 46, in this vehicular hood hinge structure, a hood 1100 is fitted at its rear end portion 1100A to a structural member 1102 of a vehicle via a hood hinge 1104. If an obstacle detecting means disposed in a vehicle body has detected impact, the hood 1100 is displaced upwards by an actuator such as an air bag 1106 or the like so that the hood hinge 1104 assumes a state shown in Fig. 46. At this moment, a center hinge 1108 constituting a part of the hood hinge 1104 rises substantially vertically, thus restricting a height of the hood 1100. A bent portion 1110 that is bent in a thickness direction thereof is formed in the center hinge 1108 at its substantially longitudinally central portion. As a result, the bent portion 1110 is offset from rotational axis portions of the center hinge 1108 at its opposed ends, laterally with respect to the vehicle. Thus, if an impacting object has impacted a vehicle during its running state, the shock of secondary impact of the impacting object on an upper face of the hood 1100 is absorbed and damped by deformation of the center hinge 1108 around the bent portion 1110, and the impacting object is protected. That is, in comparison with a load characteristic curve (as indicated by an alternate long and two-dot chain line shown in Fig. 47) in the case where the bent portion 1110 is not formed, formation of the bent portion 1110 makes it possible to reduce a peak value P of the load characteristic curve as indicated by a solid line shown in Fig. 47.

However, in this vehicular hood hinge structure, the effect of reducing a counterforce applied to the impacting object is obtained from a bending moment proportional to an amount of offset of the bent portion 1110 in the thickness direction. Therefore, if the amount of offset is increased, the peak value P of the load characteristic curve can be reduced as indicated by the solid line shown in Fig. 47. However, this known device requires the obstacle detecting means and the actuator to bring the center hinge in its operating position before the damping effect by deformation of the center hinge can be achieved. While, in a vehicle in which the hood is pivotably hinged in close proximity to the apron members, the center hinge 1108 must be considerably reduced in its longitudinal dimension, so that the amount of load that can be absorbed by the center hinge 1108 is strongly reduced. Thus, it is difficult that the load applied to the impacting object is reduced.

Further impact reducing hood hinge structures are known from JP 11 020740 A which discloses the features defined in the preamble of claim 1.

### SUMMARY OF THE INVENTION

It is an object of the invention to obtain a simple and compact vehicular hood hinge structure that can reduce a load applied to an impacting object impacting on the hood of the vehicle. This object is solved with a hood hinge structure according to claim 1.

According to an aspect of the invention, there is provided a vehicular hood hinge structure having load value maintaining device that reduces a peak value of the load applied substantially from above a vehicle and that maintains a substantially constant load value for a continuously applied load.

Thus, if an impacting object has impacted the hood of the vehicle and if a load has been applied to the hood hinge substantially from above the vehicle, the load value maintaining device can reduce a peak value of the load that is applied substantially from above the vehicle, to target value, and maintain the load substantially at the target value. As a result, the load applied to the impacting object can be reduced efficiently.

According to such a structure, the load value maintaining device may include a load absorbing means provided at least partially in link that constitute the hood hinge.

In this case, load characteristics can be easily adjusted by adjusting the load value maintaining devices provided in the links.

According to a further aspect of the invention, there is provided a vehicular hood hinge structure having a load transformation device that transforms a load applied substantially from above a vehicle by means of a plurality of load absorbing means into a number of successive reduced load peaks.

According to such a structure, by providing a plurality of load absorbing means for absorbing a load that is applied substantially from above the vehicle, the peak value of the load characteristic curve can be reduced to target value and maintained the load substantially at the target value by transforming the single large load peak into a number of small load peaks.

The reduced load peaks in the load absorbing means may succeed each other with increasing displacement of the hood.

The load absorbing means may be provided at least partially in links that constitute the hood hinge.

In this case, load absorbing characteristics of hood hinge structure can be easily adjusted by adjusting load absorbing characteristics based on the load absorbing means provided in the links.

The load absorbing means may be formed together with a plurality of links, such that the load absorbing means abut on each other, and are deformable.

In this case, since there is no need to add a special load value maintaining device or a load transformation device as a separate member, the construction of the hood hinge is also simple.

One of the load absorbing means that abut on each other may be constituted by a plurality of cut-up portions, and the other load absorbing means may be constituted by a bead portion.

In this case, the load value maintaining device can be manufactured only in a simple pressing process and thus can be produced easily.

One of the load absorbing means that abut on each other may be constituted by an overhang portion, and the other load absorbing means may be constituted by a receiving face for the overhang portion.

In this case, the load value maintaining device can be manufactured only in a simple pressing process and thus can be produced easily.

At least one of the overhang portion and the receiving face may be provided with frictional force generating means.

In this case, since load characteristics can also be adjusted by the frictional force generating means provided in at least one of the overhang portion and the receiving face, adjustment of load characteristics can be further facilitated.

The load absorbing means may have a long hole that is formed in the first link longitudinally and a plurality stoppers that are disposed in the long hole and that can abut on the second link. The stoppers are adapted to be sequentially cut by the second link when the load acts an the hood.

In this case, the stoppers abutting on the second link is displaced along the long hole formed in the first link, whereby the vertical mounting position of the hood can be adjusted easily.

### BRIEF DESCRIPTION OF THE DRAWINGS

Fig. 1 is a perspective view of a vehicular hood hinge structure according to a first explanatory example, viewed from a position diagonally forward and outward of a vehicle.
Fig. 2 is a plan view of the vehicular hood hinge structure according to the first example.
Fig. 3 is a side view of the vehicular hood hinge structure according to the first example, with a hood shown in cross-section.
Fig. 4 is a cross-sectional view along a line IV-IV shown in Fig. 2.
Fig. 5 is an explanatory view of operation of the vehicular hood hinge structure according to the first example .
Fig. 6 is a perspective view of a front portion of a vehicle to which the vehicular hood hinge structure according to the first example is applied, viewed from a position diagonally forward of the vehicle.
Fig. 7 is a graph showing a load characteristic curve of the vehicular hood hinge structure.
Fig. 8A is a side view of a vehicular hood hinge structure according to a modification of the first example .
Fig. 8B is a side view of a vehicular hood hinge structure according to another modification of the first example .
Fig. 9 is a perspective view of a vehicular hood hinge structure according to a second explanatory example, viewed from a position diagonally forward and outward of a vehicle.
Fig. 10 is a side view of the vehicular hood hinge structure according to the second example .
Fig. 11 is a cross-sectional view of the vehicular hood hinge structure according to the second example and corresponds to Fig. 4.
Fig. 12 is an explanatory view of operation of the vehicular hood hinge structure according to the second example.
Fig. 13 is a perspective view of a vehicular hood hinge structure according to a first embodiment of the invention, viewed from a position diagonally forward and outward of a vehicle.
Fig. 14 is a cross-sectional view along a line XIV-XIV shown in Fig. 13.
Fig. 15 is a graph showing a load characteristic curve of the vehicular hood hinge structure according to the first embodiment of the invention.
Fig. 16 is a perspective view of a vehicular hood hinge structure according to a second embodiment of the invention, viewed from a position diagonally forward and outward of a vehicle.
Fig. 17 is a cross-sectional view along a line XVII-XVII shown in Fig. 16.
Fig. 18 is a graph showing a load characteristic curve of the vehicular hood hinge structure according to the second embodiment of the invention.
Fig. 19 is a perspective view of a vehicular hood hinge structure according to a third explanatory example, viewed from a position diagonally forward and outward of a vehicle.
Fig. 20 is a cross-sectional view along a line XX-XX shown in Fig. 19.
Fig. 21 is a cross-sectional view along a line XXI-XXI shown in Fig. 19.
Fig. 22 is a graph showing a load characteristic curve of the vehicular hood hinge structure according to the third example.
Fig. 23 is a perspective view of a vehicular hood hinge structure according to a third embodiment of the invention, viewed from a position diagonally forward and outward of a vehicle.
Fig. 24 is a cross-sectional view along a line XXIV-XXIV shown in Fig. 23.
Fig. 25 is a graph showing a load characteristic curve of the vehicular hood hinge structure according to the third embodiment of the invention.
Fig. 26 is a perspective view of a vehicular hood hinge structure according to a fourth explanatory example, viewed from a position diagonally forward and inward of a vehicle.
Fig. 27 is an enlarged perspective view of a part of the vehicular hood hinge structure according to the fourth example, viewed from a position diagonally forward and inward of the vehicle.
Fig. 28 is a side cross-sectional view of the vehicular hood hinge structure according to the fourth example .
Fig. 29 is an explanatory view of the vehicular hood hinge structure according to the fourth example .
Fig. 30 is a cross-sectional view along a line XXX-XXX shown in Fig. 28.
Fig. 31 is a cross-sectional view along a line XXXI-XXXI shown in Fig. 28.
Fig. 32 is an explanatory view of operation of the vehicular hood hinge structure according to the fourth example.
Fig. 33 is a perspective view of a front portion of a vehicle to which the vehicular hood hinge structure according to the fourth example is applied, viewed from a position diagonally forward of the vehicle.
Fig. 34 is a perspective view of a vehicular hood hinge structure according to an fifth explanatory example, viewed from a position diagonally forward and inward of a vehicle.
Fig. 35 is a side cross-sectional view of the vehicular hood hinge structure according to the fifth example .
Fig. 36 is an explanatory view of operation of the vehicular hood hinge structure according to the fifth example.
Fig. 37 is an explanatory view of operation of the vehicular hood hinge structure according to the fifth example.
Fig. 38 is a side cross-sectional view of a vehicular hood hinge structure according to a modification of the fourth and fifth examples.
Fig. 39 is a perspective view of a vehicular hood hinge structure according to a sixth explanatory example, viewed from a position diagonally forward and inward of a vehicle.
Fig. 40 is a side cross-sectional view of the vehicular hood hinge structure according to the sixth example .
Fig. 41 is a perspective view of a vehicular hood hinge structure according to a modification of the sixth example , viewed from a position diagonally forward and inward of a vehicle.
Fig. 42 is a perspective view of a vehicular hood hinge structure according to a seventh explanatory example, viewed from a position diagonally forward and inward of a vehicle.
Fig. 43 is a side cross-sectional view of the vehicular hood hinge structure according to the seventh example .
Fig. 44 is an explanatory view of operation of the vehicular hood hinge structure according to the seventh example.
Fig. 45 is a side cross-sectional view of a vehicular hood hinge structure according to a modification of the seventh example.
Fig. 46 is a side view of a known vehicular hood hinge structure.
Fig. 47 is a graph showing a load characteristic curve of a related art known vehicular hood hinge structure.

### DETAILED DESCRIPTION OF PREFERRED EMBODIMENTS

Hereinafter, unclaimed explanatory examples and preferred embodiments of the invention will be described. In the following description, arrows FR, UP and IN in the drawings indicate a forward direction, an upward direction and a laterally inward direction with respect to a vehicle, respectively.

### (First explanatory example)

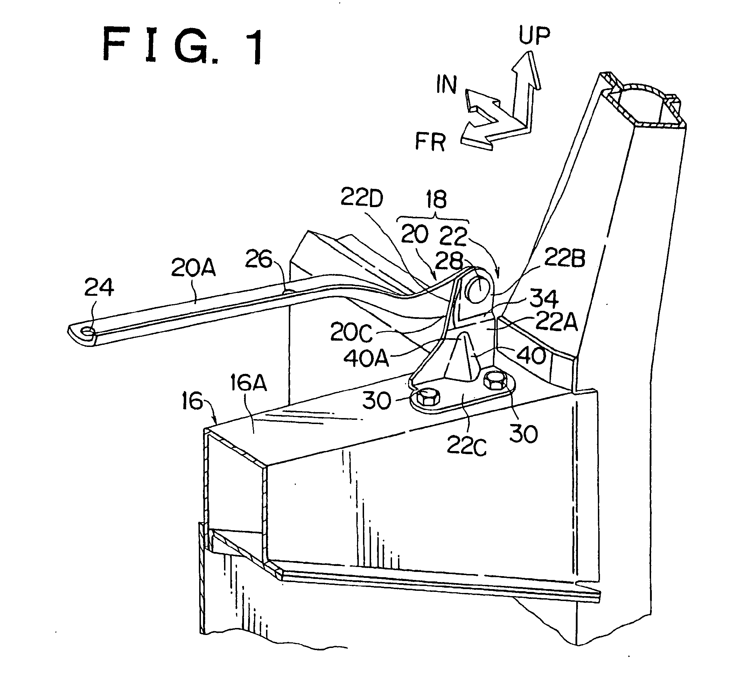

A vehicular hood hinge structure according to a first example will be described with reference to Figs. 1 to 7.

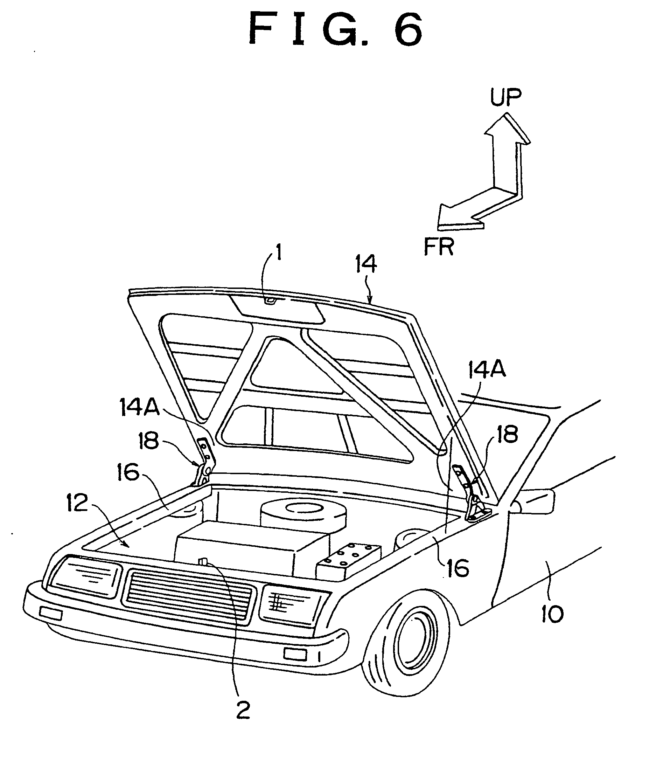

First of all, an overall structure of a front portion of the vehicle will be described. As shown in Fig. 6, a hood 14 covers an engine room 12 that is formed in a vehicle body 10 at its front portion. Laterally near-end portions 14A in a rear end portion of the hood 14 are fitted to left and right apron upper members 16 as skeletal members of the front portion of the vehicle body, via hood hinges 18. A hood striker 1 is provided on a vehicle-front side of the hood 14, and a hood lock 2 is provided on the side of the vehicle body. When the hood 14 is closed, the hood lock 2 engages the hood striker 1. Hood stoppers (not shown) made from rubber or the like are provided in upper portions of the apron upper members 16. When the hood 14 is closed, it is supported by the hood hinges 18, the hood striker 1, the hood lock 2 and the hood stoppers.

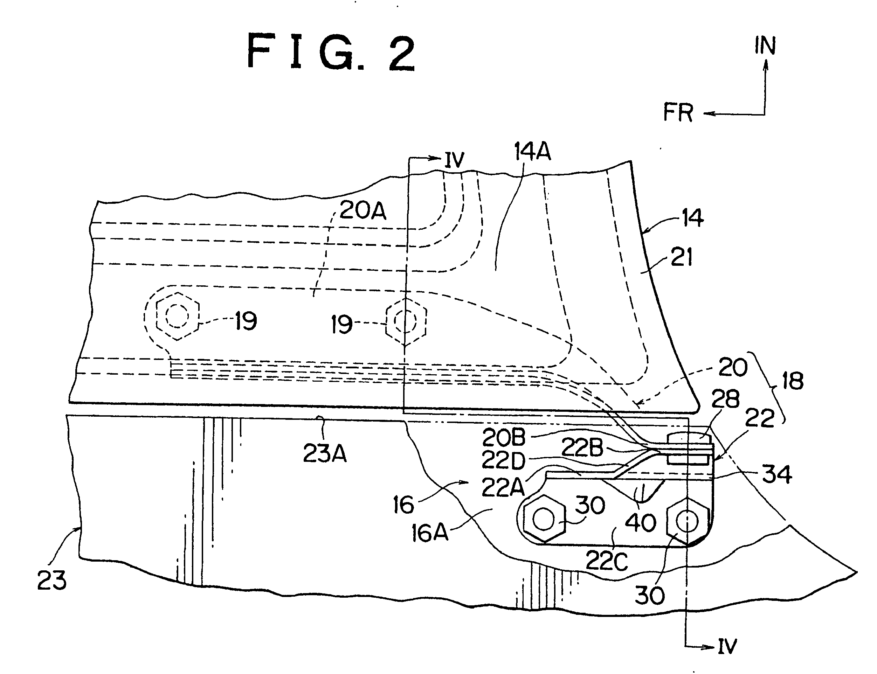

As shown in Figs. 1 and 2, each of the hood hinges 18 has a hood hinge arm 20 and a base plate 22. A hood fitting portion that extends laterally inwards is formed in the hood hinge arm 20 at its front portion. A pair of front and rear fitting holes 24, 26 are formed in the hood fitting portion 20A.

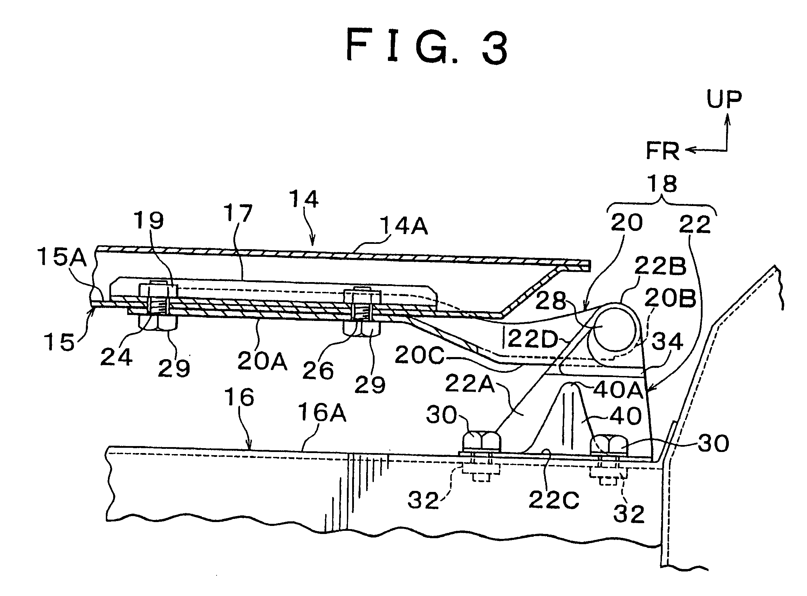

As shown in Fig. 3, a reinforcement 17 is welded to an upper face 15A of an inner panel 15 of the hood 14 longitudinally with respect to the vehicle. The hood 14 is fitted to the hood fitting portion 20A of the hood hinge arm 20 by means of a nut 19 that is fixed to the reinforcement 17 and bolts 29 that are inserted into the fitting holes 24, 26 from below.

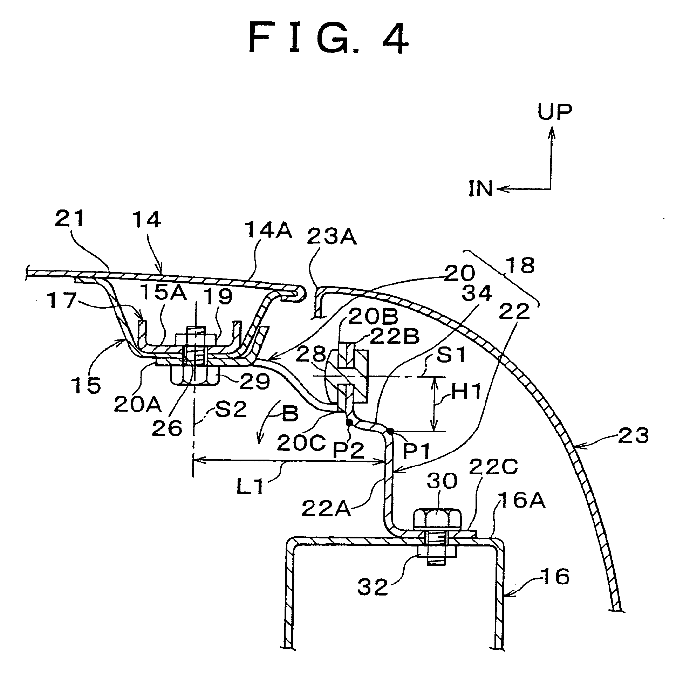

As shown in Fig. 4, the reinforcement 17 has a U-shaped cross-section with an open top and opens toward an outer panel 21 of the hood 14.

As shown in Fig. 3, a rear end portion 20B of the hood hinge arm 20 is vertically rotatably pivoted on an upper end portion 22B of a longitudinal wall portion 22A of the base plate 22 by means of a pin 28, in such a manner that a rotational axis of the hood hinge arm 20 extends laterally with respect to the vehicle.

As shown in Fig. 4, the upper end portion 22B of the longitudinal portion 22A of the base plate 22 is located below a laterally inward end portion 23A of a fender 23.

As shown in Fig. 1, a lower end portion of the longitudinal wall portion 22A of the base plate 22 is a fitting portion 22C that is extended laterally outwards and substantially horizontally. Front and rear end portions of the fitting portion 22C are fixed to an upper wall portion 16A of each of the apron upper members 16 by means of bolts 30 and nuts 32 into which the bolts 30 are screwed (see Fig. 3).

As shown in Fig. 4, a bending or flex portion 34 that is in the shape of a crank when viewed longitudinally with respect to the vehicle is formed in the longitudinal wall portion 22A of the base plate 22 at its vertically middle portion. Therefore, the upper end portion 22B is offset laterally inwards with respect to the longitudinal wall portion 22A. That is, the flex portion 34 flexes laterally inwards at an original portion or a flex point P1 on the outer side (lower side) of the vehicle, and flexes upwards at a flex point P2 on the inner side (upper side) of the vehicle. The flex portion 34 of the base plate 22 is set below or close to a lower face 20C of the hood hinge arm 20 so that the hood hinge arm 20 does not interfere with the base plate 22 when the longitudinal wall portion 22A is deformed laterally inwards.

As shown in Fig. 1, a bead 40 for ensuring surface rigidity is formed in the longitudinal wall portion 22A of the base plate 22 at its longitudinally substantially central portion. The bead 40 swells laterally outwards and is triangular in side and plan views (i.e. rather pyramid-shaped) so that the hood hinge arm 20 does not interfere with the bead 40 when the base plate 22 is deformed at the flex portion 34 laterally inwards. An upper portion 40A of the bead 40 almost reaches a position below the flex portion 34. A flange 22D for ensuring surface rigidity is formed in the longitudinal wall portion 22A of the base plate 22 at its front-side upper portion. Furthermore, the longitudinal wall portion 22A of the base plate 22 is reinforced against longitudinal deformation by being gradually increased in width longitudinally with respect to the vehicle. Operation and effect of this structure will be described later.

As shown in Fig. 4, a lateral distance L1 between a fitting portion S2 for fitting the hood hinge arm 20 to the hood 14 and a lower portion of the longitudinal wall portion 22A of the base plate 22 is longer than a vertical distance H1 between a rotation center S1 of the pin 28 and the flex point P1.

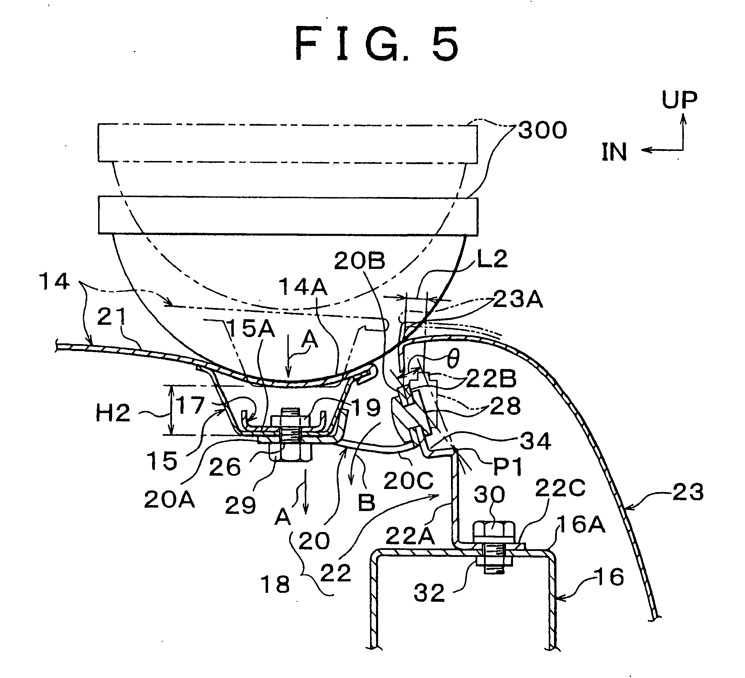

As shown in Fig. 5, if an impacting object 300 has come into abutment on the hood 14 and if the magnitude of the load applied to the hood hinge arm 20 from the hood 14 has become equal to or greater than a predetermined value, the hood fitting portion 20A of the hood hinge arm 20 makes a downward stroke (as indicated by an arrow A shown in Fig. 5). As described above, since the distance L1 is longer than the distance H1, the longitudinal wall portion 22A of the base plate 22 is likely to be deformed laterally inwards (as indicated by an arrow B shown in Fig. 4) around the flex point P1. The flange 22D shown in Figs. 1, 2 and 3 restrains deformation around the flex point P2.

Next, operation of the first example will be described.

In the first example, if the impacting object 300 has come into abutment on the hood 14 at a portion that faces a front portion of the hood hinge 18 during a running state or the like of the vehicle as indicated by a solid line shown in Fig. 5 and if the magnitude of a load applied to the hood hinges 18 from the hood 14 has become equal to or greater than a predetermined value, the hood 14 is deformed from a state indicated by an alternate long and two-dot chain line to a state indicated by the solid line. Therefore, the hood fitting portion 20A of the hood hinge arm 20 of the hood hinge 18 makes a downward stroke (as indicated by the arrow A shown in Fig. 5). Thus, the longitudinal wall portion 22A of the base plate 22 is deformed laterally inwards (as indicated by an arrow B shown in Fig. 5) around the flex point P1. Thus, the base plate 22 is deformed laterally with respect to the vehicle, whereby the hood 14 is likely to be deformed laterally with respect to the vehicle.

The hood 14 is relatively unlikely to be deformed longitudinally with respect to the vehicle by a reinforcing member such as the reinforcement 17. Because the apron upper members are disposed immediately below the hood 14, the hood is also relatively unlikely to be deformed vertically with respect to the vehicle. Thus, in comparison with the case where the hood 14 is deformed longitudinally or vertically with respect to the vehicle, in the case where the hood 14, which is less strongly reinforced laterally with respect to the vehicle, is deformed laterally with respect to the vehicle as in the invention, the amount of deformation of the hood 14 is increased and the peak of a load applied to the impacting object 300 can be reduced.

In the first example, there is no need to provide two or more flex points P1 around which the base plate 22 is deformed. Therefore, even in the case of an increased amount of deformation of the base plate 22, a decrease in rigidity of the entire hood hinge 18 can be restrained.

In the first example, if the impacting object 300 depresses the hood 14 and the hood 14 is displaced downwards by a distance H2, the portion of the hood hinge arm 20 pivoted on the base plate 22 (the portion fitted with the pin 28) is displaced laterally by a distance L2 by rotating by an angle θ in the direction of the arrow B. Thus, by providing the base plate 22 with the flex point P1 so that most of the load transmitted to the base plate 22 concentrates at the flex point P1 and by tilting the base plate by the angle θ, the hood 14 can be greatly displaced downwards and deformed. As a result, the load applied to the impacting object 300 can be lowered.

The longitudinal wall portion 22A gradually increases in width longitudinally with respect to the vehicle below the flex portion 34 of the longitudinal wall portion 22, whereby the longitudinal wall portion 22A is reinforced against longitudinal deformation. Therefore, the base plate 22 is likely to be deformed around the flex point P1 of the flex portion 34 in such a manner that the upper end portion 22B of the longitudinal wall portion 22A is deformed in the lateral direction with respect to the vehicle. Furthermore, the bead 40 provided below the flex portion 34 of the longitudinal wall portion 22A also makes it easy for the base plate 22 to be deformed around the flex point P1 of the flex portion 34 in such a manner that the upper end portion 22B of the longitudinal wall portion 22A is displaced laterally with respect to the vehicle.

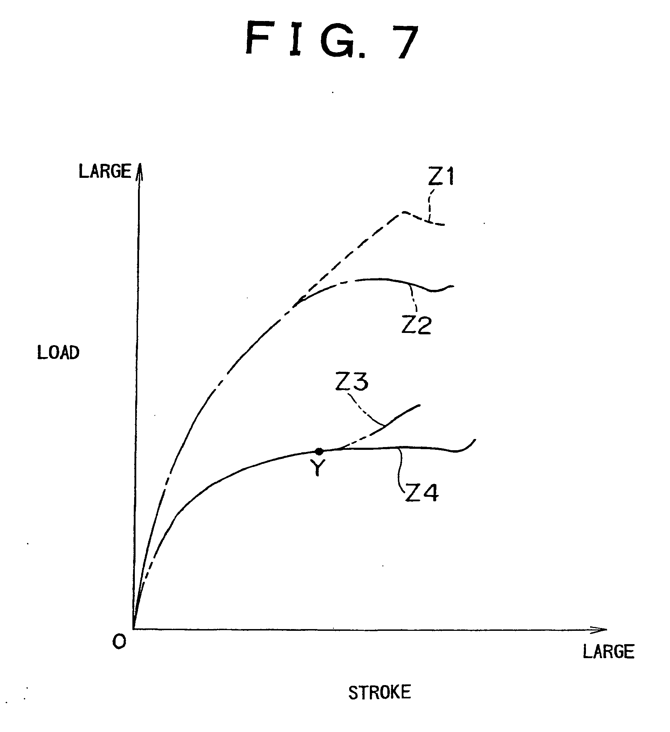

A one-dot chain line shown in Fig. 7 indicates a load characteristic curve Z2 of an impacting object in the case where the base plate 22 is provided with the flex point P1 (as in the construction of the first embodiment) and where L1/H1=1.7. On the other hand, a dotted line shown in Fig. 7 indicates a load characteristic curve Z1 in the case where the base plate 22 is not provided with the flex point P1. As shown in Fig. 7, the load characteristic curve Z2 demonstrates that the effect of reducing the load that is applied to the impacting object when the hood 14 makes an increased stroke is improved in comparison with the load characteristic curve Z1. An alternate long and two-dot chain line shown in Fig. 7 indicates a load characteristic curve Z3 of the impacting object in the case where the base plate 22 is provided with the flex point P1 and where L1/H1=2. The load characteristic curve Z3 demonstrates that the effect of reducing a load applied to the impacting object since the time when the amount of displacement of the hood 14 is not great is improved. Thus, judging from these two examples (the case of L1/H1=1.7 and the case of L1/H1=2), it is considered that the effect of reducing the load applied to the impacting object is improved in proportion to an increase in L1/H1.

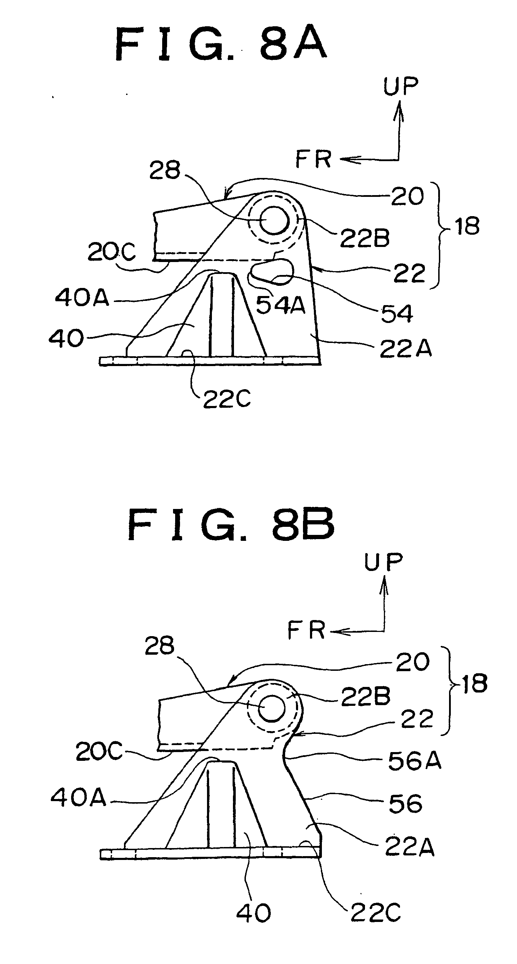

In the first example, the flex portion 34 is formed in the longitudinal wall portion 22A of the base plate 22 at its vertically middle portion, and the upper portion of the longitudinal wall portion 22A of the base plate 22 is deformed around the flex point P1 of the flex portion 34 (as indicated by the arrow B shown in Fig. 4). Instead, however, as shown in Fig. 8A, a longitudinally elongated hole 54 may be formed in the longitudinal wall portion 22A of the base plate 22 at its vertically middle portion. In this case, by providing the base plate 22 with a region having the hole 54 (fragile region), the base plate 22 is deformed in such a manner that the upper end portion 22B of the longitudinal wall portion 22A is displaced laterally inwards around the region. In this case, a vertically central portion 54A of the hole 54 is preferably set below or close to the lower face 20C of the hood hinge arm 20 so that the deformed longitudinal wall portion 22A does not interfere with the hood hinge arm 20. As shown in Fig. 8B, a triangular recess 56 may be formed in the longitudinal wall portion 22A of the base plate 22 at its vertically middle portion, on a side thereof facing the rear of the vehicle. By providing the base plate 22 with a region having the recess 56 (fragile region), the base plate 22 is deformed in such a manner that the upper end portion 22B of the longitudinal wall portion 22A is displaced laterally inwards around the region. In this case, a top portion 56A of the recess 56 is preferably set below or close to the lower face 20C of the hood hinge arm 20 so that the deformed longitudinal wall portion 22A does not interfere with the hood hinge arm 20.

### (Second explanatory example)

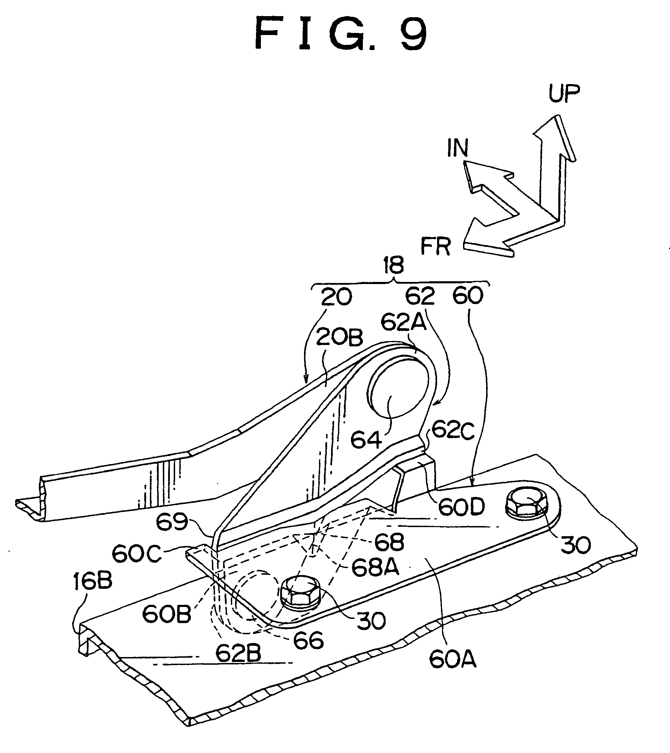

Next, a vehicular hood hinge structure according to a second example will be described with reference to Figs. 9 to 12.

Members identical with those of the first example are denoted by the same reference numerals, and the description thereof will be omitted.

As shown in Fig. 9, in the second example, the hood hinge 18 has the hood hinge arm 20, a base plate 60, and a link 62.

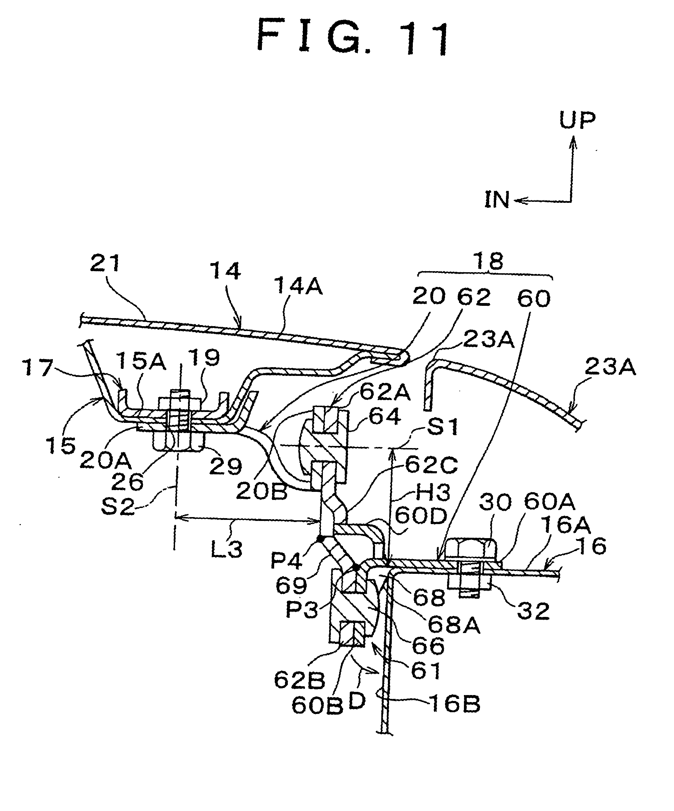

The hood hinge arm 20 is disposed such that its rotational axis extends laterally with respect to the vehicle. The rear end portion 20B of the hood hinge arm 20 is vertically rotatably pivoted on a rear end upper portion 62A of the link 62 by means of a pin 64. As shown in Fig. 11, the rear end upper portion 62A of the link 62 is located below the laterally near-end portions 14A of the hood 14.

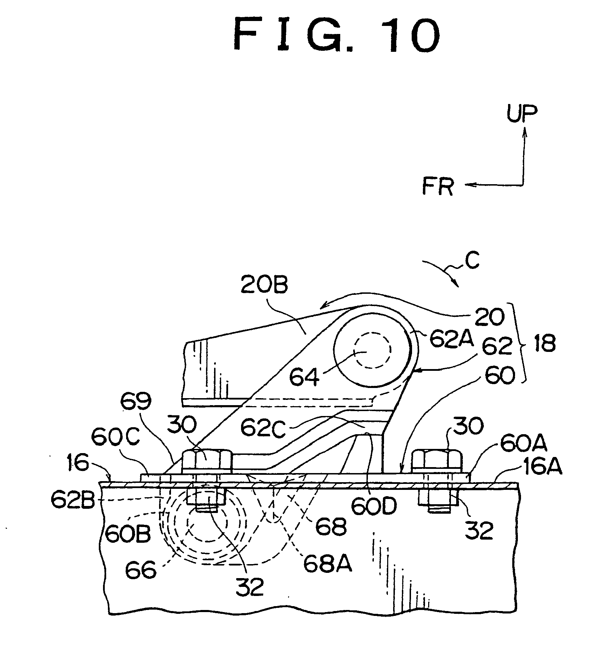

As shown in Fig. 10, a fitting portion 60A of the base plate 60 is extended substantially horizontally and longitudinally with respect to the vehicle. Front and rear end portions of the fitting portion 60A are fixed to the upper wall portion 16A of each of the apron upper members 16 by means of the bolts 30 and the nuts 32 into which the bolts 30 are screwed.

As shown in Fig. 9, a laterally inward end portion of a front portion of the fitting portion 60A of the base plate 60 is extended downwards and constitutes a longitudinal wall portion 60B. A front-end lower portion 62B of the link 62 is vertically rotatably pivoted on a lower end portion of the longitudinal wall portion 60B by means of a pin 66. A bead 68 swelling laterally outwards is formed in the longitudinal wall portion 60B at its longitudinally central portion. The bead 68 is triangular in plan and side views. As shown in Fig. 11, a laterally outward end portion 68A of the bead 68 abuts on a laterally inward side face 16B of each of the apron upper members 16. A gap 61 is formed between the longitudinal wall portion 60B of the base plate 60 and the laterally inward side face 16B of each of the apron upper members 16. Therefore, the longitudinal wall portion 60B of the base plate 60 can be deformed laterally outwards (as indicated by an arrow D shown in Fig. 11).

As shown in Fig. 9, a claw portion 60C that protrudes laterally inwards is formed in the fitting portion 60A of the base plate 60 at its front end portion. Because the front-end lower portion 62B of the link 62 abuts on the claw portion 60C from behind the vehicle, the link 62 is prevented from rotating forwards around the pin 66.

As shown in Figs. 9 and 11, a stopper portion 60D designed as engaging means that protrudes upwards is formed in the fitting portion 60A of the base plate 60 at its rear end portion. A claw portion 62C that is designed as engaging means and that is extended laterally outwards and bent downwards is formed protrusively in a rear portion of the link 62. The claw portion 62C abuts on and engages an upper face of a laterally inward end portion of the stopper portion 60D.

A flex portion 69 that is generally in the shape of a crank when viewed in the longitudinal direction with respect to the vehicle is formed in the link 62 at its vertically middle portion. Thus, an upper portion of the link 62 is offset laterally inwards with respect to a lower portion of the link 62. That is, the flex portion 69 flexes laterally inwards at an origin or a flex point P3 on the outer side (lower side) of the vehicle, and flexes upwards at a flex point P4 on the inner side (upper side) of the vehicle. A lateral distance L3 between the fitting portion S2 for fitting the hood hinge arm 20 to the hood 14 and the link 62 is longer than a vertical distance H3 between a rotation center S1 of the pin 64 and the flex point P3.

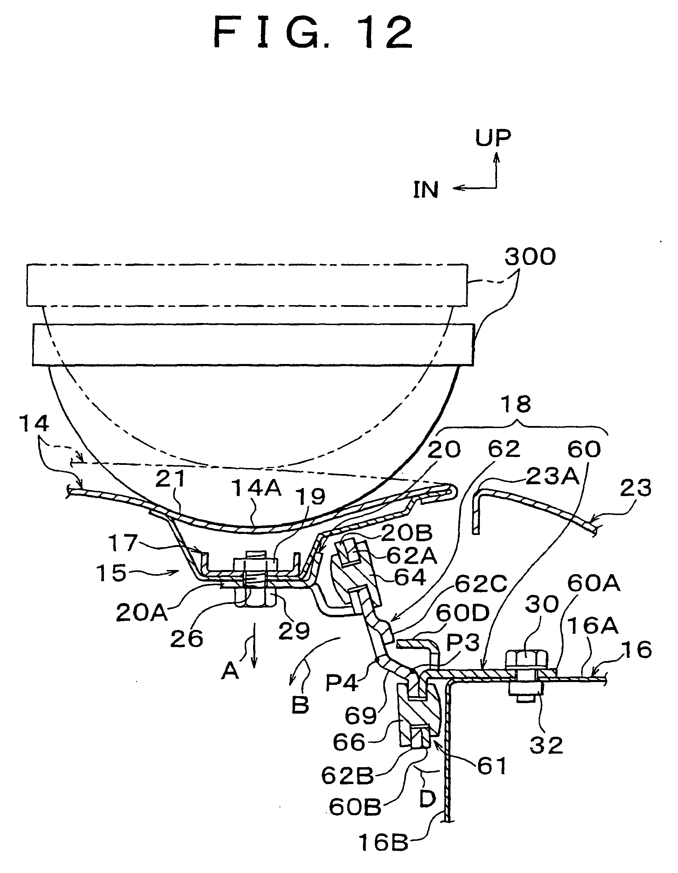

Next, operation of the second example will be described. In the second example, if the impacting object 300 has come into abutment on the hood 14 at a portion that faces the front portion of the hood hinge 18 during a running state or the like of the vehicle as indicated by a solid line shown in Fig. 12 and if the magnitude of the load applied to the hood hinge 18 from the hood 14 has become equal to or greater than a predetermined value, the hood 14 is deformed from a state indicated by a two-dot chain line to a state indicated by a solid line in the first half of an impact process. Thus, the hood fitting portion 20A of the hood hinge arm 20 of the hood hinge 18 makes a downward stroke (as indicated by an arrow A shown in Fig. 12). Therefore, the link 62 is deformed laterally inwards (as indicated by an arrow B shown in Fig. 12) around the flex point P3. At this moment, the longitudinal wall portion 60B of the base plate 60 is deformed laterally outwards (as indicated by an arrow D shown in Fig. 12).

In the second example, if the link 62 is deformed laterally inwards by a predetermined amount or more, the claw portion 62C of the link 62 is disengaged from the stopper portion 60D in a period of transition from the first half to the second half of the impact process.

Thus, in the second half of the impact process, the link 62 not only is deformed laterally inwards (as indicated by the arrow B shown in Fig. 12) but also rotates backwards (as indicated by an arrow C shown in Fig. 10) around the pin 66 and falls. The hood 14 itself is supported by one of the hood hinges 18 that is opposite the other hood hinge 18 in which the claw portion 62C has been disengaged from the stopper portion 60D, the hood striker 1, the hood lock 2, and the hood stoppers for the apron upper members 16. Therefore, if the claw portion 62C is disengaged from the stopper portion 60D, the link 62 falls rotationally, and the hood 14 is deformed due to a load from the impacting object 300 while absorbing impact energy. Thus, the distance to be covered by the hood 14 before its bottom touches the hood hinges 18 and the apron upper members 16 becomes longer, and the amount of deformation of the hood 14 is increased. The load applied to the impacting object 300 is reduced by an amount corresponding to the increase in deformation amount of the hood 14.

As a result, the load that is applied to the impacting object 300 and that is based on deformation strength of the hood hinges 18 can be reduced. An increase in deformation load resulting from contact of the bottom of the hood with the hood hinges 18 can also be restrained. A solid line shown in Fig. 7 indicates a load characteristic curve Z4 of an impacting object in the second embodiment (in the case of L3/H3=1.4). As indicated by the solid line shown in Fig. 7, the load characteristic curve Z4 demonstrates that the effect of reducing a load that is applied to the impacting object when the hood 14 makes an increased stroke is improved in comparison with the load characteristic curve Z3. If the link 62 is not designed to fall rotationally, it is considered that load gradually increases substantially beyond a point Y where the bottom of the hood 14 touches the hood hinges 18, as indicated by the load characteristic curve Z3 (the first example). However, in the second example, the link 62 is disengaged from the base plate 60 in the vicinity of the point Y and then falls rotationally. Thus, the distance to be covered by the hood 14 before its bottom touches the hood hinges 18 and the apron upper members 16 becomes longer. Meanwhile, impact energy is absorbed due to deformation of the hood 14. For this reason, it is considered that a rise in load is restrained even beyond the point Y as indicated by the load characteristic curve Z4.

Judging from the load characteristic curves Z3, Z4 shown in Fig. 7, it is apparent that the lateral distance L3 between the link 62 and the fitting portion S2 for fitting the hood hinge arm 20 to the hood 14 in the second example can be made shorter than the lateral distance L1 between the lower portion of the longitudinal wall portion 22A of the base plate 22 and the fitting portion S2 for fitting the hood hinge arm 20 to the hood 14 in the first example. Therefore, in the second example, rigidity of the entire hood hinge 18 can be improved in comparison with the first example.

In the second example, there is no need to provide two or more flex points P3 around which the link 62 is deformed. Therefore, even in the case of an increased amount of deformation of the link 62, a decrease in rigidity of the entire hood hinge 18 can be restrained.

In the second example, if the impacting object 300 depresses the hood 14 and the hood 14 is displaced downwards as in the first example, the portion of the link 62 fitted with the pin 64 angularly changes laterally inwards (as indicated by the arrow B). Thus, by providing the link 62 with the flex point P3 so that strain concentrates at the flex point P3, the above-mentioned angular change can be easily generated and the hood 14 can be greatly deformed downwards. As a result, the load applied to the impacting object 300 can be lowered.

As in the first and second examples, due to a construction in which the rotational center of the hood is displaced laterally (i.e., in left-and-right directions with respect to the vehicle) by a predetermined load that is applied to the hood substantially from above, the hood is likely to be deformed laterally. Thus, by laterally deforming the hood, which is relatively likely to be deformed laterally, the load applied to the impacting object can be reduced. Thus, in the above first and second examples, the amount of deformation of the hood can be increased and the peak of the load applied to the impacting object can be reduced.

As described hereinbefore, in the above first and second examples, the base plate 22 or the link 62 is deformed laterally inwards. However, the base plate 22 or the link 62 may be deformed laterally outwards. Further, in the above second example, if the link 62 is deformed laterally by a predetermined amount or more, the link 62 is disengaged from the base plate 60 and then falls rotationally and backwards with respect to the vehicle. Instead, however, the link 62 may be designed to fall rotationally and forwards with respect to the vehicle.

### (First embodiment)

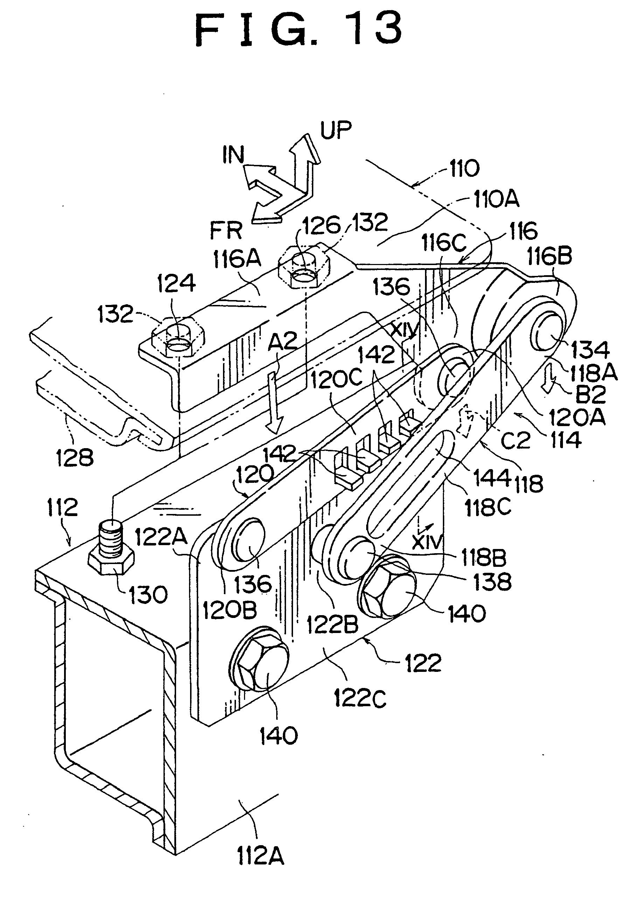

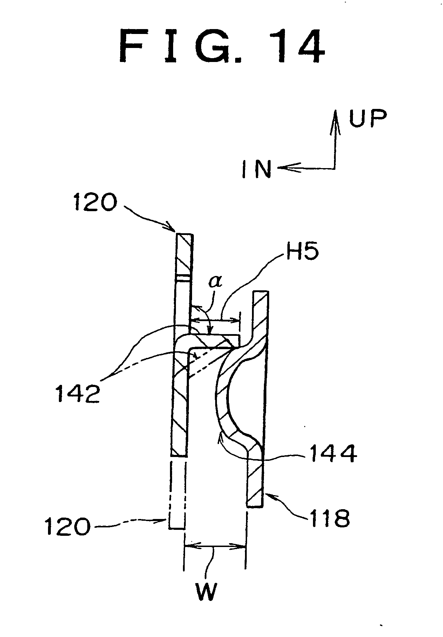

Next, a vehicular hood hinge structure according to a first embodiment of the invention will be described with reference to Figs. 13 and 14.

As shown in Fig. 13, a hood 110 covers an engine room that is formed in a vehicle body at its front portion. Laterally near-end portions 110A of a rear end portion of the hood 110 are fitted to left and right apron upper members 112 as skeletal members of the front portion of the vehicle body, via hood hinges 114.

The hood hinge 114 is of a four-link type and has a hood hinge arm 116, a second arm 118, a first arm 120, and a base plate 122. A hood fitting portion 116A that is directed laterally inwards is formed in the hood hinge arm 116 at its front-end upper portion. A pair of front and rear fitting holes 124, 126 are formed in the hood fitting portion 116A. Bolts 130 are inserted into the fitting holes 124, 126 from below the vehicle body. The hood 110 is fitted to the hood fitting portion 116A of the hood hinge arm 116 by means of the bolts 130 and nuts 132 that are disposed on a hood inner panel 128 constituting a back side of the hood 110.

A rear end portion 118A of the second arm 118 is vertically rotatably pivoted on a rear end portion 116B of the hood hinge arm 116 by means of a pin 134 that is disposed along the lateral direction with respect to the vehicle. A rear end portion 120A of the first arm 120 is vertically rotatably pivoted at a position 116C that is slightly spaced forwards from the pin 134 of the hood hinge arm 116, by means of a pin 136 that is disposed laterally with respect to the vehicle.

A front end portion 120B of the first arm 120 is vertically rotatably pivoted on a front-end upper portion 122A of the base plate 122 by means of a pin 136 that is disposed laterally with respect to the vehicle. A front end portion 118B of the second arm 118 is vertically rotatably pivoted at a position 122B that is slightly spaced backwards from the pin 136 of the base plate 122, by means of a pin 138 that is disposed laterally with respect to the vehicle.

The base plate 122 is fixed at front and rear end portions of its lower portion 122C to a laterally outward wall portion 112A of each of the apron upper members 112, by means of bolts 140 and nuts (not shown) into which the bolts 140 are screwed. Fig. 13 shows a state in which the hood hinges 114 are closed (i.e., the hood hinge 110 is closed). In this state, the hood hinge arm 116 is prevented, by a stopper (not shown), from being displaced toward the second arm 118 and the first arm 120 (as indicated by an arrow A2 shown in Fig. 13) and in the opposite direction (in the direction opposite to the direction indicated by the arrow A2 shown in Fig. 13).

As shown in Fig. 14, since the second arm 118 and the first arm 120 are laterally spaced from each other by a predetermined width W, they do not interfere with each other when the hood 110 is opened or closed.

As shown in Fig. 13, a plurality of cut-up portions 142 (referred to also as load absorbing means) as a load value maintaining device (load transformation device) are formed longitudinally at intervals of a predetermined distance in a longitudinally middle-to-rear portion 120C of the first arm 120. A bead portion 144 (referred to also as load absorbing means) as a load value maintaining device is formed longitudinally in a longitudinally front-to-middle portion 118C of the second arm 118.

As shown in Fig. 14, the cut-up portions 142 formed in the first arm 120 are flexed toward the second arm 118. The bead portion 144 formed in the second arm 118 swells toward the first arm 120. Thus, if an impacting object comes into abutment on the hood 110 and the hood fitting portion 116A of the hood hinge arm 116 makes a downward stroke (as indicated by the arrow A2 shown in Fig. 13), the second arm 118 rotates downwards (as indicated by an arrow B2 shown in Fig. 13) around the pin 138. Further, the first arm 120 also rotates downwards (as indicated by an arrow C2 shown in Fig. 13) around the pin 136. At this moment, due to differences in direction and speed of displacement between the cut-up portions 142 and the bead portion 144, the first arm 120 and the second arm 118 come into abutment on each other and are deformed as indicated by a two-dot chain line shown in Fig. 14.

As shown in Fig. 13, the cut-up portions 142 are increased in cut-up height H5 (see Fig. 14) in proportion to a decrease in distance from the front side of the vehicle. Therefore, the first arm 120 and the second arm 118 surely abut on each other even in the case of an increase in distance W therebetween.

Next, operation of the first embodiment will be described.

In the first embodiment, if an impacting object comes into abutment on the hood 110 during a running state or the like of the vehicle and the hood hinge arm 116 makes a downward stroke (as indicated by the arrow A2 shown in Fig. 13), the second arm 118 rotates downwards (as indicated by the arrow B2 shown in Fig. 13) around the pin 138. The first arm 120 also rotates downwards (as indicated by the arrow C2 shown in Fig. 13) around the pin 136.

At this moment, due to differences in direction and speed of displacement between the cut-up portions 142 formed in the first arm 120 and the bead portion 144 formed in the second arm 118, the first arm 120 and the second arm 118 come into abutment on each other and are deformed as indicated by a two-dot chain line shown in Fig. 14. Furthermore, the cut-up portions 142 come into abutment on the bead portion 144 one after another starting with the rearmost one thereof, and then are deformed.

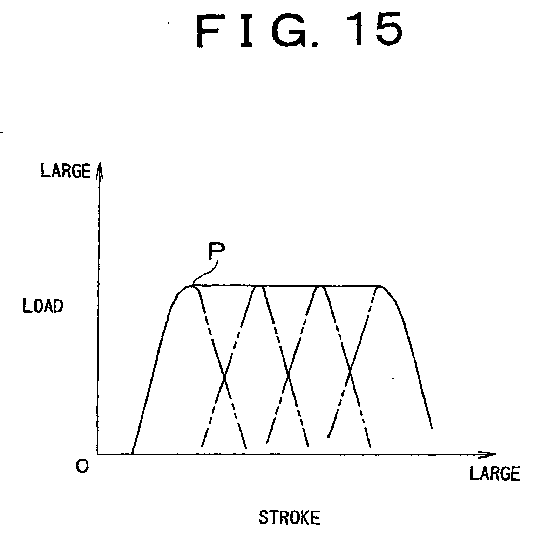

Thus, by performing at least one of adjustment of deformation strength of the cut-up portions 142 based on changes in thickness, rising angle α or the like of the cut-up portions 142 and adjustment of the number of the cut-up portions 142 and a distance between adjacent ones of the cut-up portions 142, a peak value P of the load applied to the hood hinge 114 substantially from above the vehicle can be reduced to a target value, as shown in Fig. 15. Until the hood hinge 114 is deformed to a predetermined extent, a rise in the load applied to the impacting object is restrained as in the second example, and the reduced peak value P can also be maintained. As a result, the load applied to the impacting object can be reduced efficiently.

In the first embodiment, the cut-up portions 142 are gradually increased in cut-up height H5 (see Figs. 13 and 14) in proportion to a decrease in distance from the front side of the vehicle. Therefore, the first arm 120 and the second arm 118 surely abut on each other even in the case of an increase in distance W therebetween, and thus the load applied to the impacting object can be reduced reliably.

In the first embodiment, load characteristics can be easily adjusted by performing at least one of adjustment of deformation strength of the cut-up portions 142 based on changes in thickness, rising angle α or the like of the curt-up portions 142 and adjustment of the number of the cut-up portions 142 and a distance between adjacent ones of the cut-up portions 142.

In the first embodiment, the load value maintaining device including the cut-up portions 142 and the bead portion 144 is formed in the first arm 120 and the second arm 118, which constitute the hood hinge 114. Therefore, there is no need to add a load value maintaining device as a separate member. Further, the cut-up portions 142 and the bead portion 144 can be manufactured only in a simple pressing process and thus can be produced easily.

### (Second embodiment)

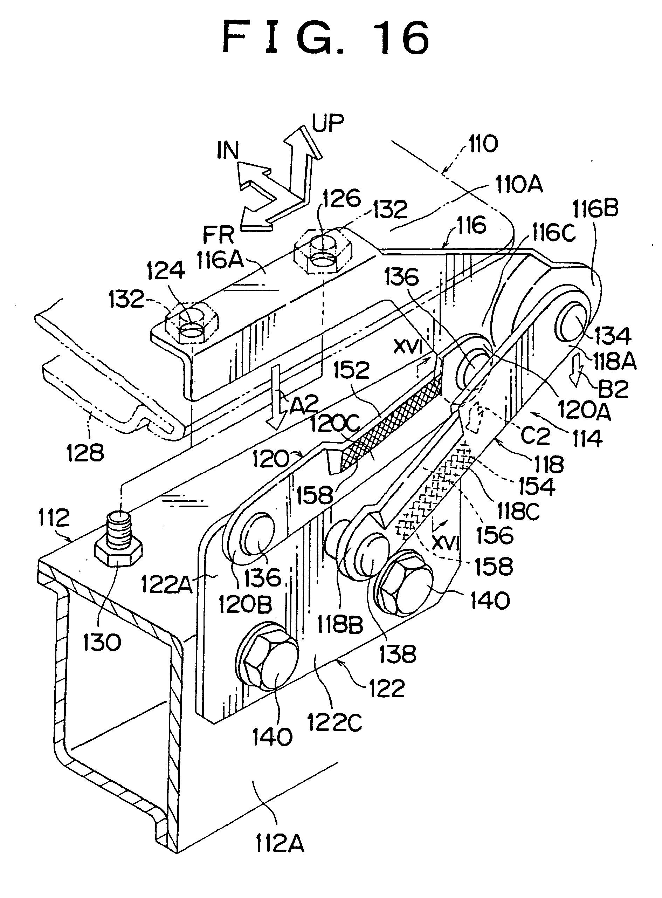

A vehicular hood hinge structure according to a second embodiment of the invention will be described with reference to Figs. 16 to 18.

Members identical with those of the first embodiment are denoted by the same reference numerals, and the description thereof will be omitted.

As shown in Fig. 16, in the second embodiment, an overhang portion 152 of a predetermined length is formed longitudinally in the longitudinally middle-to-rear portion 120C of the first arm 120 as a load value maintaining device. A receiving face 154 is formed longitudinally in the longitudinally front-to-middle portion 118C of the second arm 118 as a load value maintaining device.

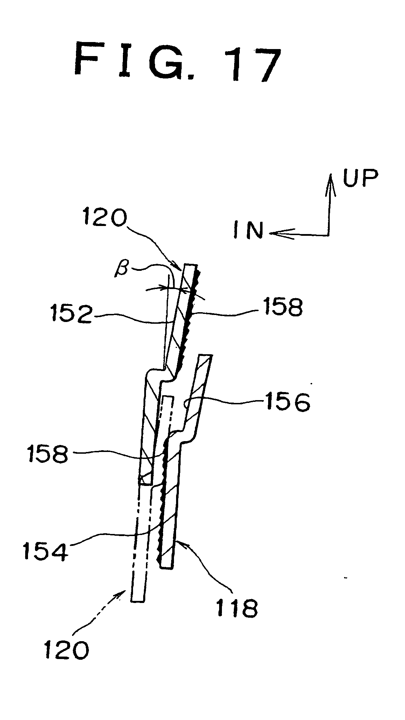

As shown in Fig. 17, the overhang portion 152 formed in the first arm 120 protrudes toward the second arm 118. An upper portion 156 of the receiving face 154 formed in the second arm 118 tilts away from the first arm 120. Thus, if the hood 110 is pressed substantially from above and moves slightly downwards, the overhang portion 152 approaches the receiving face 154 but does not interfere with the upper portion 156 of the second arm 118. On the other hand, if an impacting object comes into abutment on the hood 110 and the hood fitting portion 116A of the hood hinge arm 116 makes a great downward stroke (as indicated by an arrow A2 shown in Fig. 16), the overhang portion 152 comes into abutment on the receiving face 154 as indicated by a two-dot chain line shown in Fig. 17.

Frictional force generating means is formed in at least one of the overhang portion 152 and the receiving face 154 (in each of them in Figs. 16 and 17). Frictional force generating means 158 are formed of fine incisions, asperities or the like. When the overhang portion 152 and the receiving face 154 come into abutment on each other and are deformed, generation of (an increase in) a frictional force during mutual sliding of the frictional force generating means 158 can also reduce the load applied to the impacting object.

Next, operation of the second embodiment will be described.

In the second embodiment, if an impacting object comes into abutment on the hood 110 during a running state or the like of the vehicle and the hood hinge arm 116 makes a downward stroke (as indicated by the arrow A2 shown in Fig. 16), the second arm 118 rotates downwards (as indicated by the arrow B2 shown in Fig. 16) around the pin 138. The first arm 120 also rotates downwards (as indicated by the arrow C2 shown in Fig. 16) around the pin 136.

At this moment, due to differences in direction and speed of displacement between the overhang portion 152 formed in the first arm 120 and the receiving face 154 formed in the second arm 118, the first arm 120 and the second arm 118 come into abutment on each other and are deformed as indicated by a two-dot chain line shown in Fig. 17.

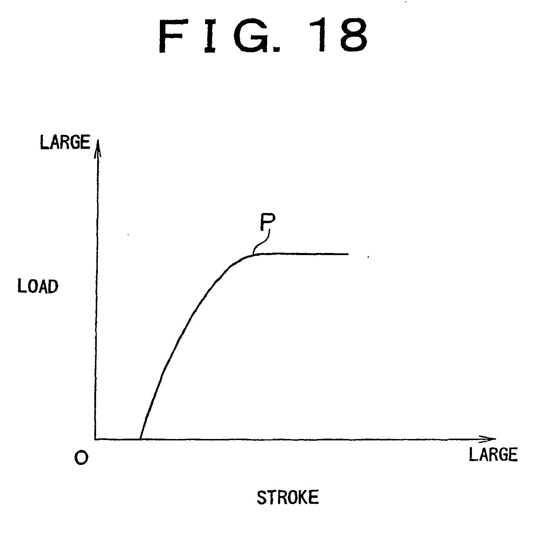

Thus, by performing at least one of adjustment of deformation strength of the overhang portion 152 based on changes in thickness, overhang angle β or the like of the overhang portion 152 and adjustment of deformation strength of the second arm 118 on the side of the receiving face 154, a peak value P of the load that is applied to the hood hinge 114 substantially from above the vehicle can be reduced to a target value, as shown in Fig. 18. The reduced peak value P can also be maintained until the hood hinge 114 is deformed to a predetermined extent. As a result, the load applied to the impacting object can be reduced efficiently.

In the second embodiment, load characteristics can also be adjusted by the frictional force generating means 158 that are formed in at least one of the overhang portion 152 and the receiving face 154. Thus, adjustment of load characteristics can be made more easily.

In the second embodiment, by performing at least one of adjustment of deformation strength of the overhang portion 152 based on changes in thickness, overhang angle β or the like of the overhang portion 152 and adjustment of deformation strength of the second arm 118 on the side of the receiving face 154, load characteristics can be adjusted easily.

In the second embodiment, the overhang portion 152 and the receiving face 154 as load value maintaining devices are formed respectively in the first arm 120 and the second arm 118, which constitute a part of the hood hinge 114. Therefore, there is no need to add a load value maintaining device as a separate member. Further, the overhang portion 152 and the receiving face 154 can be manufactured only in a simple pressing process and thus can be produced easily.

### (Third explanatory example)

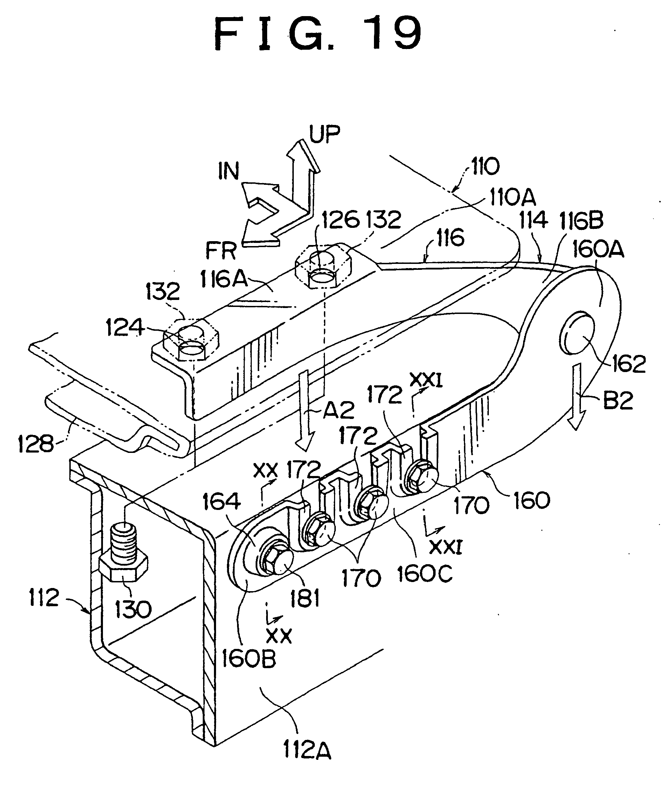

Next, a vehicular hood hinge structure according to a third example will be described with reference to Figs. 19 to 22.

Members identical with those of the first embodiment are denoted by the same reference numerals, and the description thereof will be omitted.

As shown in Fig. 19, in the third example, the hood hinge 114 is composed of the hood hinge arm 116 and a second arm 160 that also serves as a base plate. A rear end portion 160A of the second arm 160 is vertically rotatably pivoted on the rear end portion 116B of the hood hinge arm 116, by means of a pin 162 that is disposed laterally with respect to the vehicle. Fig. 19 shows a state in which the hood hinge 114 is closed. In this state, the hood hinge arm 116 is prevented, by a stopper (not shown), from being displaced toward the second arm 160 (as indicated by an arrow A2 shown in Fig. 19) and in the opposite direction (in a direction opposite to the direction indicated by the arrow A2 shown in Fig. 19).

A front end portion 160B of the second arm 160 is fixed to the laterally outward wall portion 112A of each of the apron upper members 112 by means of a shoulder bolt 161 (referred to also as load absorbing means) as fitting means that constitutes a part of a load value maintaining device (referred to also as a load transformation device).

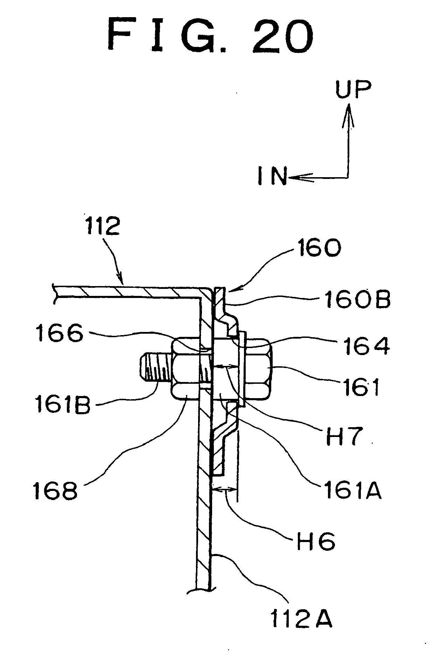

As shown in Fig. 20, a washer retaining counter bore 164 (referred to also as load absorbing means) as a first fitting portion constituting a part of the load value maintaining device that protrudes laterally outwards is formed in the second arm 160 at its front end portion 160B. A shoulder portion 161A of the shoulder bolt 161 is inserted in the washer retaining counter bore 164. A threaded portion 161B of the shoulder portion 161 penetrates a circular hole 166 that is formed in each of the apron upper members 112 at its laterally outward wall portion 112A. A nut 168 is screwed onto the threaded portion 161B from inside and laterally with respect to the vehicle.

By determining a height H6 of the washer retaining counter bore 164 and a height H7 of the shoulder portion 161A of the shoulder bolt 161, the torque at the time when the front end portion 160B of the second arm 160 starts rotating around the shoulder bolt 161 can be set as a predetermined value.

As shown in Fig. 19, a plurality of shoulder bolts 170 (referred to also as load absorbing means) as fitting means constituting a part of the load value maintaining device are disposed longitudinally at intervals of a predetermined distance in a longitudinally front-to-middle portion 160C of the second arm 160. The longitudinally front-to-middle portion 160C of the second arm 160 is fixed to the laterally outward wall portion 112A of each of the apron upper members 112 by means of the shoulder bolts 170. A plurality of washer retaining rails 172 (referred to also as load absorbing means) as a second fitting portion constituting a part of the load value maintaining device that protrudes laterally outwards are disposed longitudinally at intervals of a predetermined distance in the longitudinally front-to-middle portion 160C of the second arm 160.

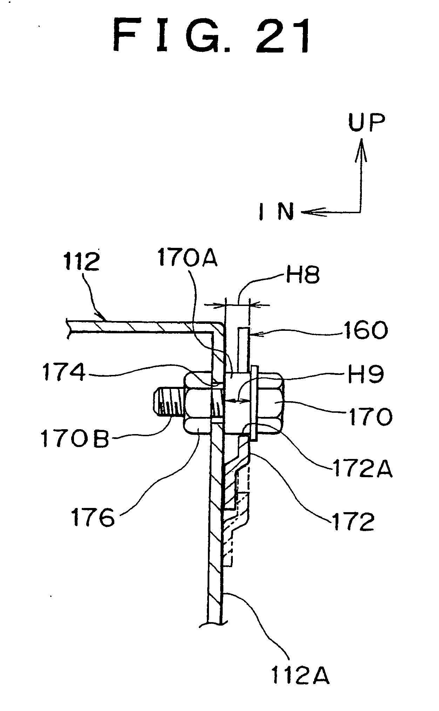

As shown in Fig. 21, an opening 172A of each of the washer retaining rails 172 is directed upwards. The shoulder portion 170A of a corresponding one of the shoulder bolts 170 is inserted into a bottom portion in the opening 172A. The threaded portion 170B of the shoulder bolt 170 penetrates the circular hole 174 formed in each of the apron upper members 112 at its laterally outward wall portion 112A.

By determining a height H8 of the washer retaining rails 172 and a height H9 of the shoulder portion 170A of the shoulder bolt 170, the torque at the time when the second arm 160 is displaced to a lower position indicated by a two-dot chain line shown in Fig. 21 can be set as a predetermined value.

Next, operation of the third example will be described.

In the third example, if an impacting object comes into abutment on the hood 110 during a running state or the like of the vehicle and the hood hinge arm 116 makes a downward stroke (as indicated by the arrow A2 shown in Fig. 19), a downward load (as indicated by an arrow B2 shown in Fig. 19) is applied to the pin 162. In this case, if the magnitude of the load has become greater than a predetermined value, the second arm 160 starts rotating downwards around the shoulder bolt 161. Each of the washer retaining rails 172 also slides downwards with respect to a corresponding one of the shoulder bolts 170.

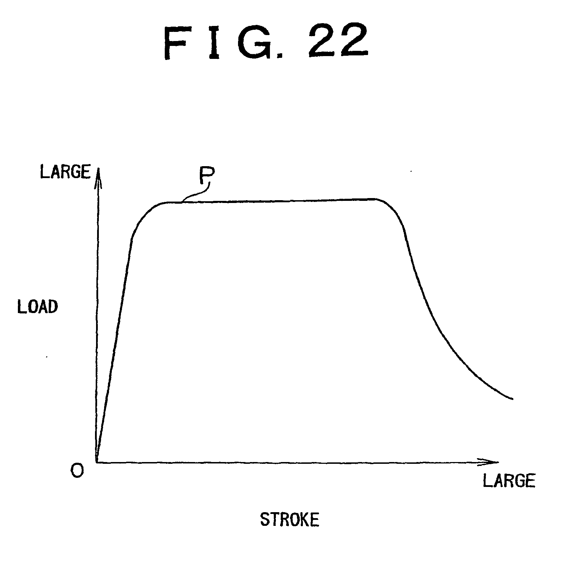

Thus, by adjusting at least one of a relation between the height H6 of the washer retaining counter bore 164 and the height H7 of the shoulder portion 161A of the shoulder bolt 161 and a relation between the height H8 of the washer retaining rails 172 and the height H9 of the shoulder portions 170A of the shoulder bolts 170, the peak value P of the load applied to the hood hinge 114 substantially from above the vehicle can be reduced to a target value as shown in Fig. 22. The reduced peak value P can also be maintained until the hood hinge 114 is deformed into a predetermined extent. As a result, the load applied to the impacting object can be reduced efficiently.

In the third example, by adjusting at least one of a relation between the height H6 of the washer retaining counter bore 164 and the height H7 of the shoulder portion 161A of the shoulder bolt 161 and a relation between the height H8 of the washer retaining rails 172 and the height H9 of the shoulder portions 170A of the shoulder bolts 170, load characteristics can be adjusted easily.

In the third example, since the washer retaining counter bore 164 and the washer retaining rails 172 as a load value maintaining device are formed in the second arm 160 constituting the hood hinge 114, there is no need to add a load value maintaining device as a separate member. Further, the washer retaining counter bore 164 and the washer retaining rails 172 can be manufactured only in a simple pressing process and thus can be produced easily.

### (Third embodiment)

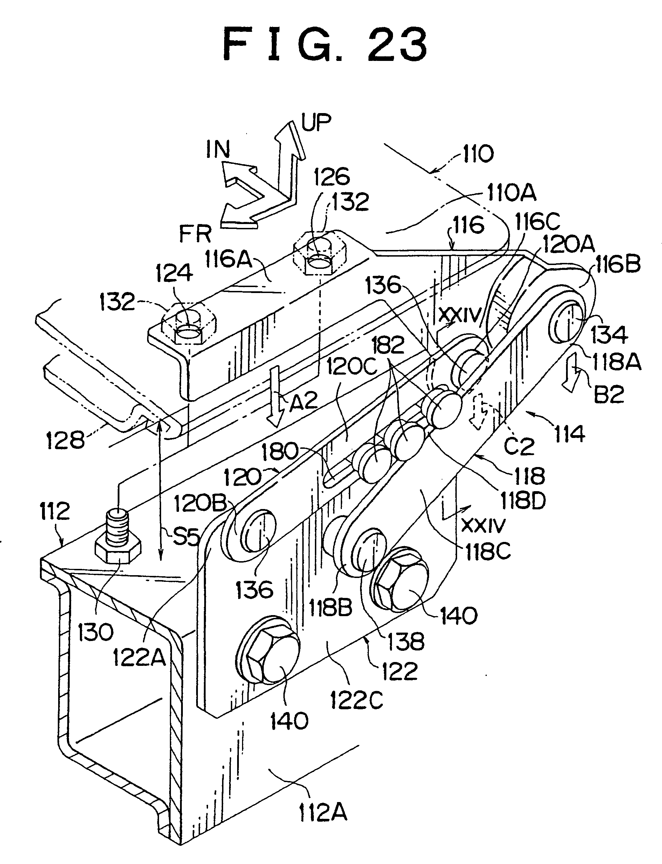

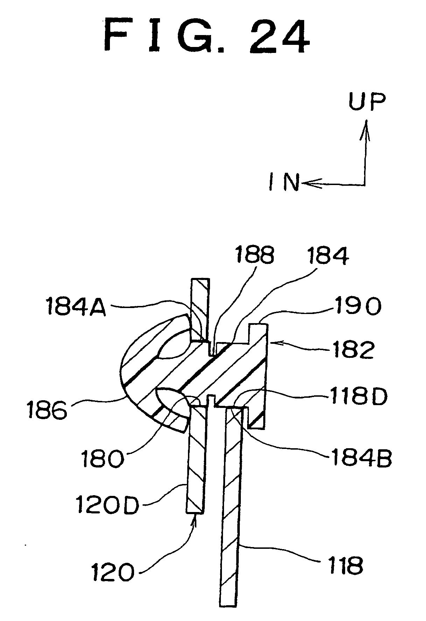

Next, a vehicular hood hinge structure according to a third embodiment of the invention will be described with reference to Figs. 23 and 24.

Members identical with those of the first embodiment are denoted by the same reference numerals, and the description thereof will be omitted.

As shown in Fig. 23, in the third embodiment, a long hole 180 constituting a part of the load value maintaining or load transformation device (load transformation device) is formed longitudinally in the longitudinally middle-to-rear portion 120C of the first arm 120. A plurality of stoppers 182 (referred to also as load absorbing means) constituting a part of the load value maintaining device are engaged with the long hole 180. The stoppers 182 are made from a resin such as polyethylene, polypropylene or the like.

As shown in Fig. 24, the stoppers 182 are fitted on an apical side 184A of a shaft portion 184 in the long hole 180. A clip portion 186 that is formed at the apex of the shaft portion 184 is engaged with a laterally inward face 120D of the first arm 120 in an outer peripheral portion of the long hole 180. On the other hand, as for a rearmost one of the stoppers 182, a root side 184B of the shaft portion 184 abuts on an upper wall portion 118D of the second arm 118. A height of the hood fitting portion 116A of the hood hinge arm 116, e.g., a distance S5 from an upper wall portion 112B of each of the apron upper members 112 is maintained constant. A large-diameter portion 190 is formed in the shaft portion 184 at its root portion, whereby the shaft portion 184 is prevented from being disengaged from the upper wall portion 118D of the second arm 118.

A small-diameter portion 188 is formed in the shaft portion 184 of each of the stoppers 182 at its longitudinally central portion. Thus, if an impacting object comes into abutment on the hood 110 and the hood hinge arm 116 makes a downward stroke (as indicated by an arrow B2 shown in Fig. 23), the second arm 118 rotates downwards (as indicated by the arrow B2 shown in Fig. 23) around the pin 138. The first arm 120 rotates downwards (as indicated by an arrow C2 shown in Fig. 23) around the pin 136. At this moment, a rearmost one of the stoppers 182 ruptures at the small-diameter portion 188, and the root side 184B of the shaft portion 184 of a second rearmost one of the stoppers 182 comes into abutment on the upper wall portion 118D of the second arm 118.

Next, operation of the third embodiment will be described.

In the third embodiment, in a state of normal use, as for the rearmost one of the stoppers 182 in the long hole 180 as shown in Fig. 23, the root side 184B of the shaft portion 184 abuts on the upper wall portion 118D of the second arm 118. The height of the hood fitting portion 116A of the hood hinge arm 116, e.g., the distance S5 from the upper wall portion 112B of each of the apron upper members 112 is maintained constant. Thus, by displacing the stoppers 182 along the long hole 180 and adjusting their fitting positions, it becomes possible to employ the hood hinge 114 also in vehicles that are different in distance between the hood 110 and the upper wall portion 112B of the apron upper member 112.

If an impacting object comes into abutment on the hood 110 during a running state or the like of the vehicle and the hood hinge arm 116 makes a downward stroke (as indicated by an arrow A2 shown in Fig. 23), the second arm 118 rotates downwards (as indicated by the arrow B2 shown in Fig. 23) around the pin 138. The first arm 120 also rotates downwards (as indicated by the arrow C2 shown in Fig. 23) around the pin 136.

At this moment, due to differences in direction and speed of displacement between the first arm 120 and the second arm 118, the rearmost one of the stoppers 182 ruptures at the small-diameter portion 188, and the root side 184B of the shaft portion 184 of a second rearmost one of the stoppers 182 comes into abutment on the upper wall portion 118D of the second arm 118. In accordance with the magnitude of the load applied substantially from above, the stoppers 182 rupture one after another, starting with the rearmost one thereof.

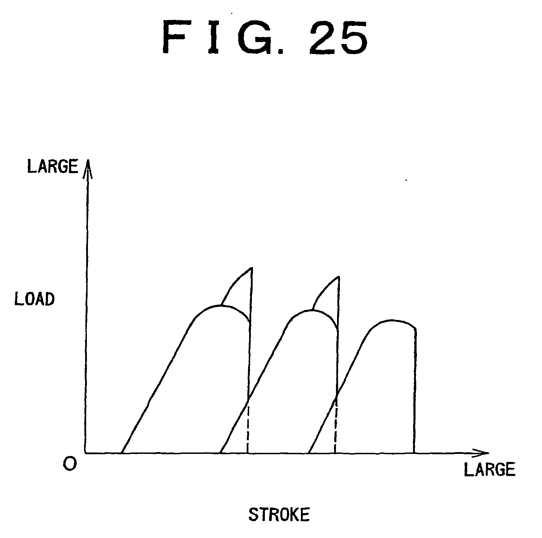

Thus, if it is assumed that the load to be absorbed by the side of the vehicle is constant, a load that is applied to the hood hinge 114 substantially from above the vehicle as shown in Fig. 25 absorbs impact energy by sequential rupture of the plurality of the stoppers 182 of the load value maintaining device. Thus, this load value maintaining device or load transformation device can reduce to a target value the peak of the load applied to the impacting object.

Thus, by performing at least one of adjustment of rupture strength of the stoppers 182 based on changes in diameter of the small-diameter portions 188 of the stoppers 182, a material for the stoppers 182 or the like and adjustment of the number of the stoppers 182 and a distance between adjacent ones of the stoppers 182, the peak value P of the load applied to the hood hinge 114 substantially from above the vehicle can be reduced. The reduced peak value P can also be maintained until the hood hinge 114 is deformed to a predetermined extent. As a result, the load applied to the impacting object can be reduced efficiently.

In the third embodiment, it is possible to adjust a vertical fitting position of the hood 110 by means of the stoppers 182 constituting a part of the load value maintaining device. Therefore, there is no need to additionally provide a member for adjusting a vertical fitting position of the hood 110.

In the foregoing description of the third embodiment, the plurality of the stoppers 182 are provided. Instead, a single stopper generally in the same shape as of the long hole 180 may be provided. In this case, as shown in Fig. 25, a sudden decrease in load resulting from rupture of the stoppers 182 can be restrained.

In the above first and third embodiments, a plurality of load absorbing means (the cut-up portions 142 and the stoppers 182) are provided. In such a construction, the peak of load can be reduced to a target value by load absorbing means for reducing the peak value of the load applied substantially from above the vehicle. By providing a plurality of load absorbing means, impact energy that can be absorbed by the load transformation device can be adjusted.

In each of the above first and third embodiments as shown in Figs. 15 and 25 respectively, the peak of load based on the load absorbing means is offset with respect to a stroke of the hood. Therefore, the reduced peak of load can be maintained, and thus the amount of impact energy that can be absorbed can be increased even if the vertical dimension of the load value maintaining device has been reduced.

In the above embodiments, the hood hinges 114 are fitted to the apron upper members 112. However, the hood hinges 114 may be fitted to another member such as a cowl top side.

### (Fourth example)

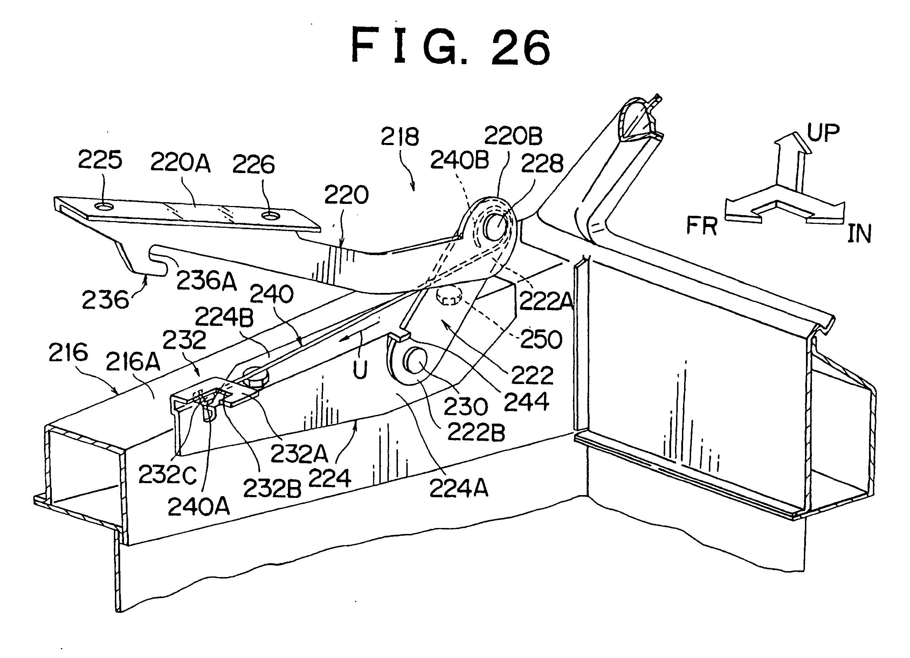

Next, a vehicular hood hinge structure according to a fourth explanatory example will be described with reference to Figs. 26 to 33.

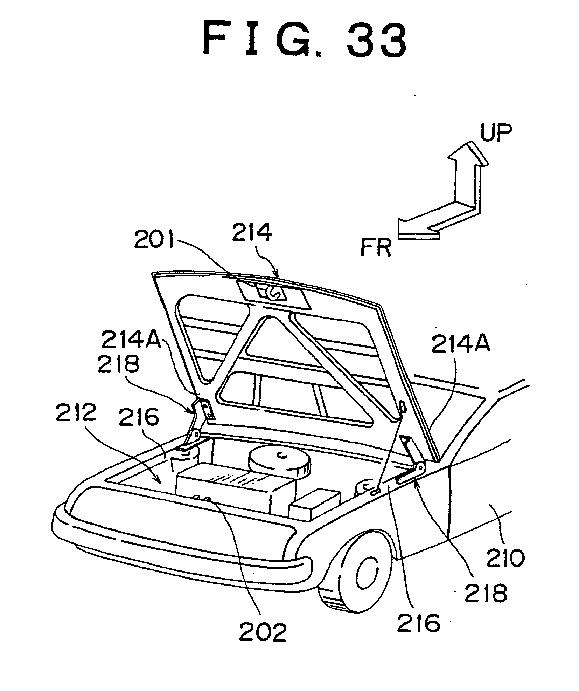

As shown in Fig. 33, a hood 214 covering an engine room 212 that is formed in a vehicle body 210 at its front portion is fitted at its rear near-end portions 214A to left and right apron upper members 216 as skeletal members of the front portion of the vehicle body, by means of hood hinges 218. A hood striker 201 is provided on the front side of the hood 214 with respect to the vehicle, and a hood lock 202 that engages the hood striker 201 when the hood 214 is closed is provided on the side of the vehicle body. Hood stoppers (not shown) made from rubber or the like are provided in upper portions of the apron upper members 216. When the hood 214 is closed, it is supported by the hood hinges 218, the hood striker 201, the hood lock 202 and the hood stoppers.

As shown in Fig. 26, each of the hood hinges 218 has a hood hinge arm 220 as an arm portion, a link 222 as rotation center holding means or a link portion, and a base plate 224 as a base portion. A hood fitting portion 220A that is directed laterally inwards is formed in the hood hinge arm 220 at its front-end upper portion. A pair of front and rear fitting holes 225, 226 are formed in the hood fitting portion 220A.

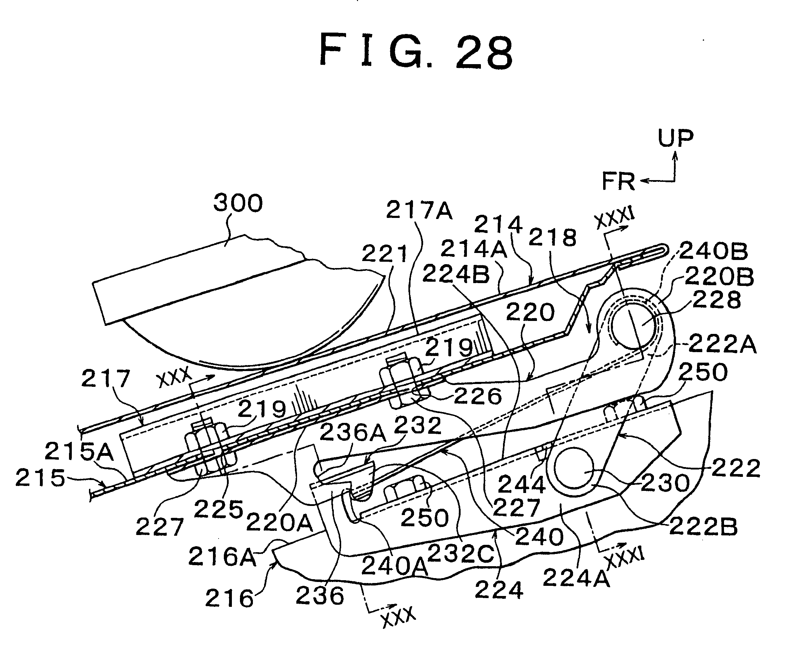

As shown in Fig. 28, a reinforcement 217 is welded to an upper face 215A of an inner panel 215 of the hood 214 longitudinally with respect to the vehicle. By means of bolts 227 that are inserted into fitting holes 225, 226 from below the vehicle and nuts 219 that are fixed to the reinforcement 217, the hood 214 is fitted to the hood fitting portion 220A of the hood hinge arm 220. The reinforcement 217 has a cross-section in the shape of an inverted hat opening upwards. An upper end portion 217A of the reinforcement 217 almost reaches an outer panel 221 of the hood 214. Thus, the load applied to the outer panel 221 from the impacting object 300 can be transmitted to the hood hinge arm 220 of the hood hinge 218 at the earliest possible stage.

A rear end portion 222A of the link 222 is vertically rotatably pivoted on a rear end portion 220B of the hood hinge arm 220, by means of a pin 228 that is disposed laterally with respect to the vehicle. A front end portion 222B of the link 222 is vertically rotatably pivoted on a longitudinally middle portion of a longitudinal wall portion 224A of a base plate 224, by means of a pin 230 that is disposed laterally with respect to the vehicle. A bracket portion 232 is formed in the base plate 224 at its front end portion.

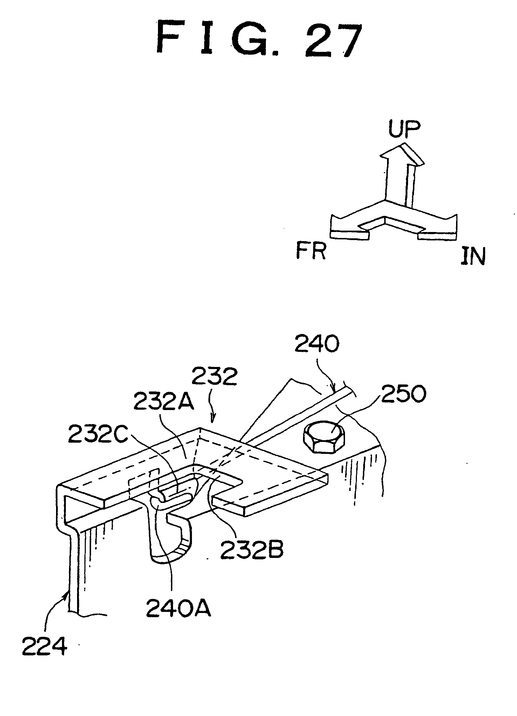

As shown in Fig. 27, a basal portion 232A of the bracket portion 232 is designed as a plate portion that is extended substantially horizontally and laterally inwards. A recess portion 232B is formed in the basal portion 232A from its front side. A grapple portion 232C that is directed downwards is formed in the basal portion 232A at its laterally outward rear portion.

As shown in Fig. 26, a claw portion 236 is formed in the hood fitting portion 220A of the hood hinge arm 220 at its front-end lower portion. A recess portion 236A is formed in the claw portion 236 from its rear side. Thus, if the hood fitting portion 220A of the hood hinge arm 220 is displaced backwards, the claw portion 236 engages the recess portion 232B of the bracket portion 232 and prevents rotation of the pins 228, 230 and thus backward displacement of the hood 214.

A hook portion 240A that is formed in a metal wire 240 at its front end portion engages the grapple portion 232C of the bracket portion 232. The wire 240 is designed as rotation center holding means or a supporting member.

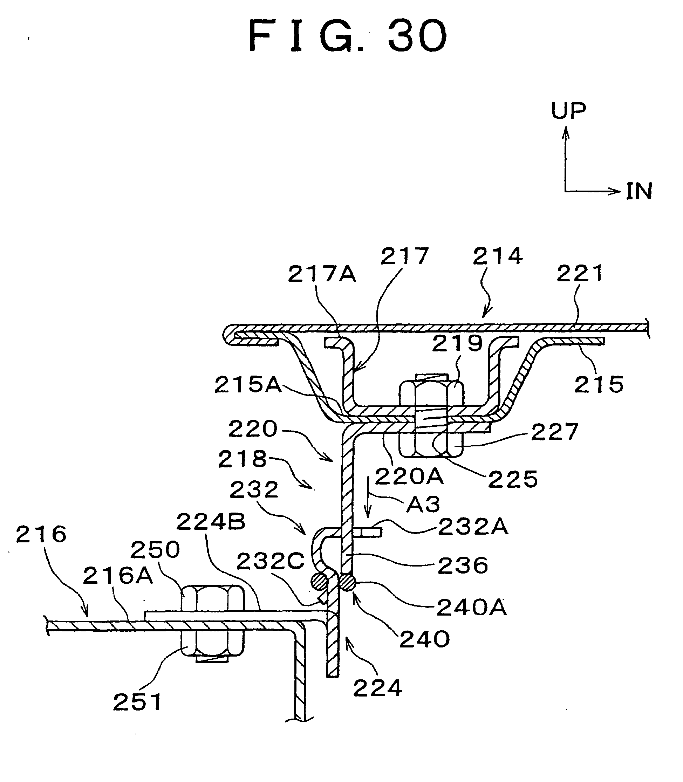

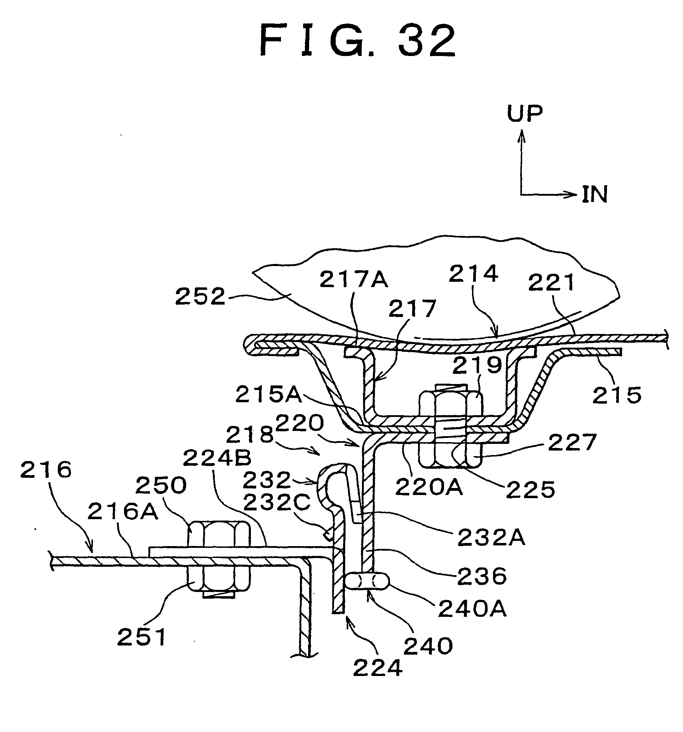

As shown in Fig. 30, the hook portion 240A of the wire 240 is located below the claw portion 236 of the hood hinge arm 220. If the claw portion 236 is displaced downwards (as indicated by an arrow A3 shown in Fig. 30), the hook portion 240A of the wire 240 is pushed out by the claw portion 236 and disengaged from the grapple portion 232C as shown in Fig. 32. If the claw portion 236 is displaced downwards (as indicated by an arrow A3 shown in Fig. 30), the basal portion 232A of the bracket portion 232 is pressed by the hood hinge arm 220 and bent downwards.

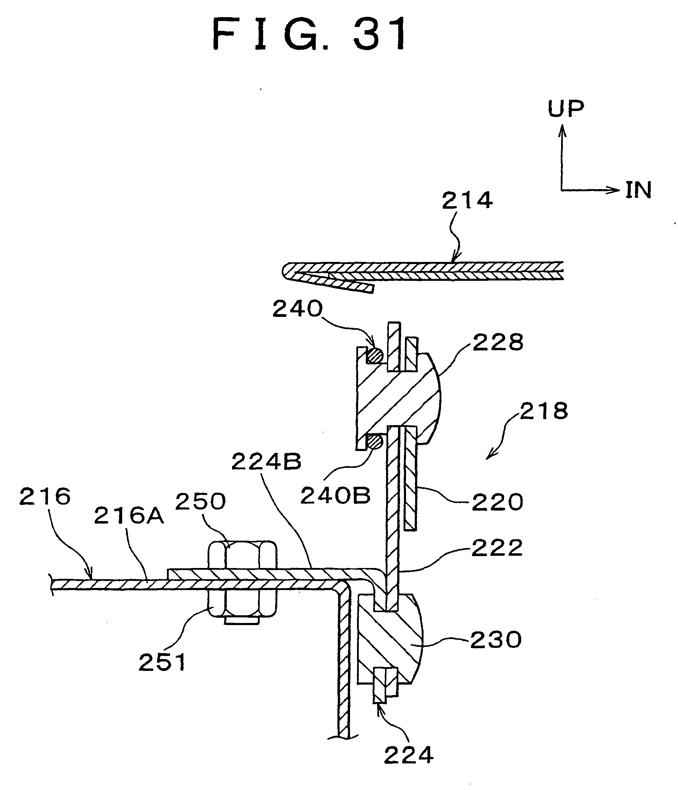

As shown in Fig. 26, a hook portion 240B is formed in the wire 240 at its rear end portion. As shown in Fig. 31, the hook portion 240B of the wire 240 engages the pin 228. The hook portion 240B of the wire 240 is curved out arcuately. A tensile force is applied to the pin 228 along the wire 240 (as indicated by an arrow U shown in Fig. 26), due to a force that winds the hook portion 240B around the pin 228.

On the other hand, a positioning claw 244 is disposed in such a manner as to rise laterally inwards, in an upper portion of a longitudinally middle portion of the longitudinal wall portion 224A of the base plate 224. The link 222 abuts on the positioning claw 244 and thus holds the hood 214 in a predetermined fitting position against the tensile force. As a result, if the magnitude of the load applied from the hood 214 is smaller than a first predetermined value, the pin 228 as a rotation center of the hood 214 is held in a hold position shown in Fig. 26, due to a tensile force applied to the wire 240.

Front and rear end portions of the upper wall portion 224B of the base plate 224 are fixed to an upper wall portion 216A of each of the apron upper members 216, by a bolt 250 and a nut 251 into which the bolt 250 is screwed (see Fig. 30).

Next, operation of the fourth example will be described.

In the fourth example, if the magnitude of the load applied to the hood hinges 218 from the hood 214 is smaller than the first predetermined value, the pin 228 as a rotation center of the hood 214 is held in the hold position shown in Fig. 26. Therefore, it is possible to make it unlikely for the rotation center of the hood 214 to fluctuate when it is normally opened and closed. Thus, operability of the hood 214 is improved.

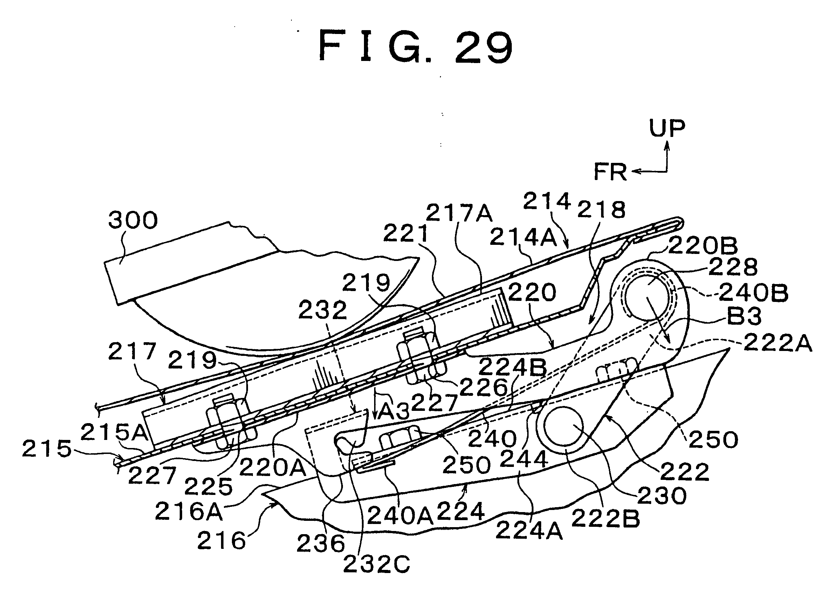

If the impacting object 300 has come into abutment on the hood 214 at a portion that faces a front portion of one of the hood hinges 218 and if the magnitude of the load applied to the hood hinge 218 from the hood 214 has become equal to or greater than the first predetermined value, the outer panel 221 comes into abutment on the reinforcement 217 and the front portion of the hood hinge arm 220 of the hood hinge 218 makes a downward stroke (as indicated by an arrow A3 shown in Fig. 29). Therefore, the claw portion 236 of the hood hinge arm 220 is displaced downwards (as indicated by an arrow A3 shown in Fig. 30), and the hook portion 240A of the wire 240 is pushed out downwards by the claw portion 236 and disengaged from the grapple portion 232C as shown in Fig. 32.

As a result, as shown in Fig. 29, the pin 228 and the link 222 rotate around the pin 230 and fall downwards (as indicated by an arrow B3 shown in Fig. 29). Thus, the hood hinge arm 220 that is supported by the pin 228 can rotate downwards (as indicated by the arrow A3 shown in Fig. 29). The hood 214 itself is supported by one of the hood hinges 218 that is opposite the other hood hinge 218 in which the hook portion 240A of the hook 240 has been disengaged from the grapple portion 232C, the hood striker 201, the hood lock 202, and the hood stoppers for the apron upper members 216. Thus, even if the hook portion 240A has been disengaged from the grapple portion 232C in one of the hood hinges 218, the hood hinge arm 220 is displaced downwards (as indicated by the arrow A3 shown in Fig. 29). While absorbing impact energy, the hood 214 is deformed due to a load from the impacting object 300. Thus, the distance to be covered by the hood 214 before its bottom touches the hood hinges 218 and the apron upper members 216 becomes longer, and the amount of deformation of the hood 214 is increased. The load applied to the impacting object 300 is reduced by an amount corresponding to the increase in deformation amount of the hood 214.

In the fourth example, the upper end portion 217A of the reinforcement 217 almost reaches the outer panel 221 of the hood 214. Therefore, the outer panel 221 easily comes into abutment on the reinforcement 217. As a result, the load applied to the outer panel 221 from the impacting object 300 can be transmitted to the hood hinge arm 220 of the hood hinge 218 at the earliest possible stage.

In the fourth example, since the wire 240 connects the grapple portion 232C of the base plate 224 to the link 222, the link 222 can be supported by the wire 240 reliably. If the magnitude of the load applied from the hood 214 is equal to or greater than the first predetermined value, the link 222 surely becomes unsupported and falls rotationally.

In the fourth example, the claw portion 236 of the hood hinge arm 220 that is formed in the hood hinge 218 at its front portion falls, whereby the hook portion 240A of the wire 240 is disengaged from the grapple portion 232C of the base plate 224. Thus, if the magnitude of the load applied to the front portion of the hood hinge 218 substantially from above the vehicle is equal to or greater than the predetermined value, the claw portion 236 of the hood hinge arm 220 can surely disengage the hook portion 240A of the wire 240 from the grapple portion 232C of the base plate 224.

In the fourth example, the wire 240 applies a tensile force that is substantially proportional to its own weight to the link 222 in advance. Thus, the wire 240 is fitted securely during normal use and can be prevented from being disengaged.

In the fourth example, of the metal wire 240 makes the hood hinges 218 compact and lightweight and facilitates production and tuning of tensile force.

### (Fifth explanatory example)

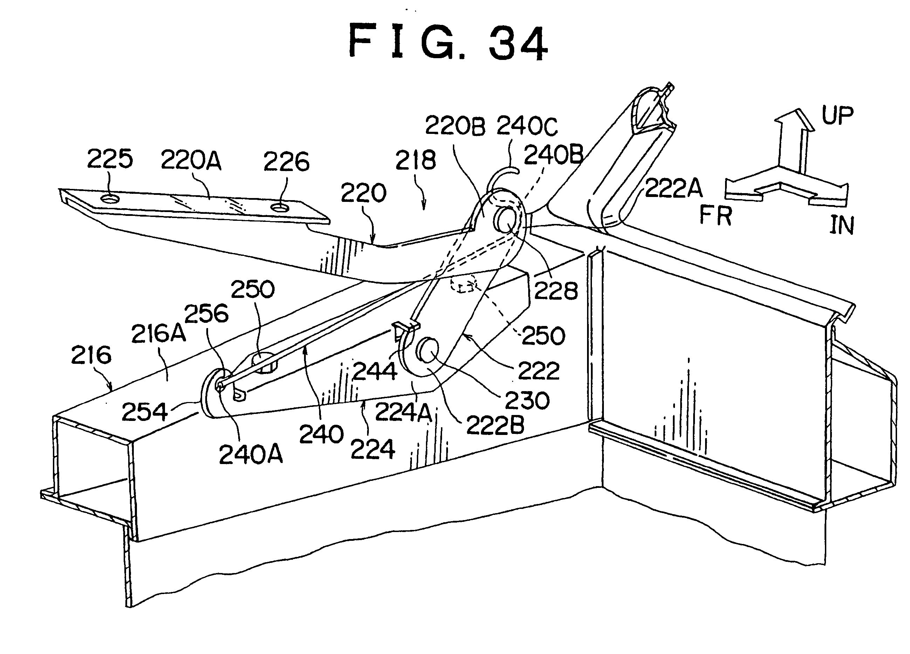

Next, a vehicular hood hinge structure according to an fifth explanatory example will be described with reference to Figs. 34 to 38.

Members identical with those of the fourth example are denoted by the same reference numerals, and the description thereof will be omitted.

As shown in Fig. 34, a salient portion 254 that is directed upwards is formed in the base plate 224 at its front end portion. A through-hole 256 is formed in the salient portion 254. The hook portion 240A of the wire 240 is engaged with the through-hole 256. On the other hand, a release portion 240C that is curved upwards arcuately is formed at the apex of the hook portion 240B of the wire 240. Thus, the rear end portion of the wire 240 is curved out in the shape of S.

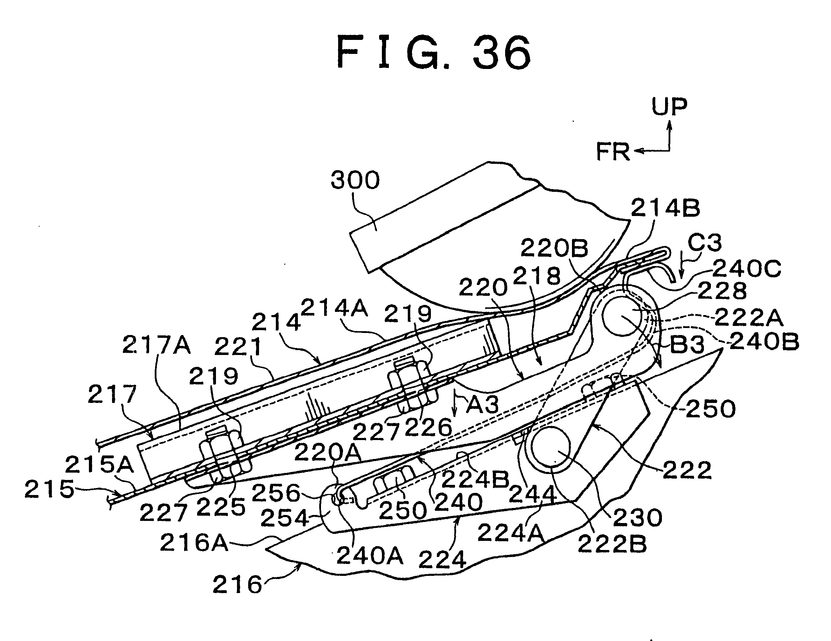

Thus, as shown in Fig. 36, if the release portion 240C of the wire 240 is depressed with a load of the first predetermined value or more being applied thereto from above, the wire 240 rotates around the through-hole 256 and the hook portion 240B is disengaged from the pin 228.

Next, operation of the fifth example will be described.

In the fifth example, as is the case with the fourth example, if the magnitude of the load applied to the hood hinges 218 from the hood 214 is smaller than the first predetermined value, the pin 228 that serves as a rotation center of the hood 214 is held in the hold position shown in Fig. 34. Therefore, it is possible to make it unlikely for the rotation center of the hood 214 to fluctuate when it is normally opened and closed. Thus, operability of the hood 214 is improved.

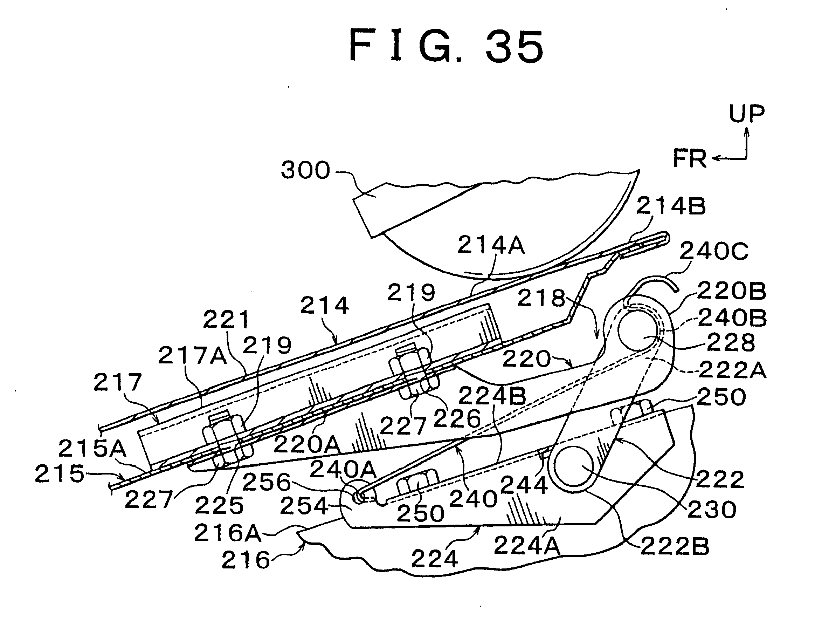

As shown in Fig. 35, if the impacting object 300 has come into abutment on the hood 214 at a portion that faces the rear portion of one of the hood hinges 218 during a running state or the like of the vehicle and if the magnitude of the load applied to the hood hinges 218 from the hood 214 has become equal to or greater than the first predetermined value, a rear-end edge portion 214B of the hood 214 makes a downward stroke (as indicated by an arrow C3 shown in Fig. 36) as shown in Fig. 36. Therefore, the release portion 240C of the wire 240 is depressed from above, and the hook portion 240B of the wire 240 is disengaged from the pin 228.

As a result, the pin 228 and the link 222 rotate around the pin 230 and fall downwards (as indicated by an arrow B3 shown in Fig. 36), and the hood hinge arm 220 supported by the pin 228 is displaced downwards (as indicated by an arrow A3 shown in Fig. 36). The hood 214 itself is supported by one of the hood hinges 218 that is opposite the other hood hinge 218 in which the hook portion 240B of the hook 240 has been disengaged from the pin 228, the hood striker 201, the hood lock 202, and the hood stoppers for the apron upper members 216. Thus, if the hook portion 240B has been disengaged from the pin 228, the hood hinge arm 220 is displaced downwards (as indicated by the arrow A3 shown in Fig. 36). While absorbing impact energy, the hood 214 is deformed due to a load from the impacting object 300. Thus, the distance to be covered by the hood 214 before its bottom touches the hood hinges 218 and the apron upper members 216 becomes longer, and the amount of deformation of the hood 214 is increased. The load applied to the impacting object 300 is reduced by an amount corresponding to the increase in deformation amount of the hood 214.

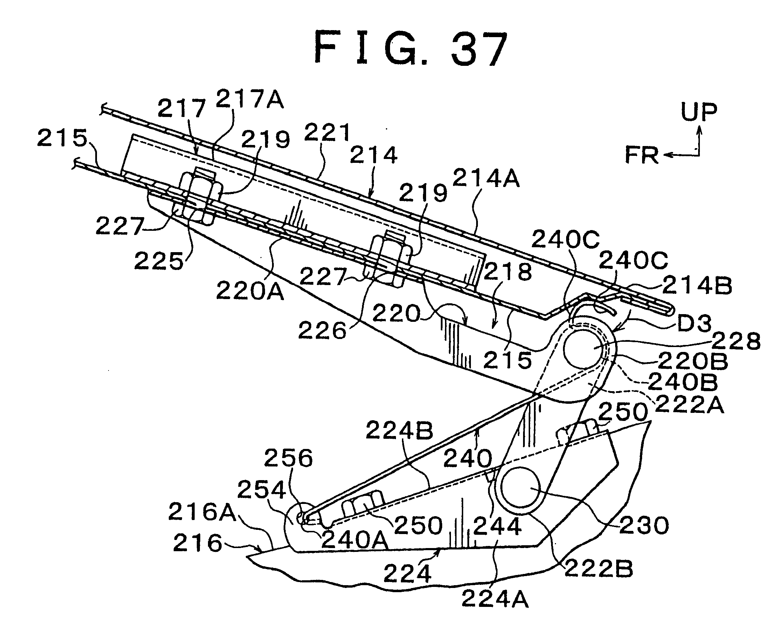

In the fifth example, as shown in Fig. 37, when the hood 214 is opened, the inner panel 215 in the rear-end edge portion 214B of the hood 214 interferes with the release portion 240C of the wire 240 and presses and deforms the release portion 240C in such a direction that the wire 240 is wound around the pin 228 (as indicated by an arrow D3 shown in Fig. 37). Therefore, when the hood 214 is open, the hook portion 240B of the wire 240 is unlikely to be disengaged from the pin 228. Thus, the hood 214 can be supported reliably.

In the fifth example, since the wire 240 connects the salient portion 254 of the base plate 224 to the link 222, the link 222 can be reliably supported by the wire 240. If the magnitude of the load from the hood 214 has become equal to or greater than the first predetermined value, the link 222 surely becomes unsupported and falls rotationally.

In the fifth example, the release portion 240C of the wire 240 disposed in the rear portion of the hood hinge 218 is depressed by the rear-end edge portion 214B of the hood 214, whereby the wire 240 is disengaged from the pin 228. Thus, if the magnitude of the load applied to the rear portion of the hood hinge 218 substantially from above the vehicle has become equal to or greater than the first predetermined value, the wire 240 can be reliably disengaged from the pin 228.

In the fifth example, the wire 240 applies a tensile force that is substantially proportional to its own weight to the link 222 in advance. Thus, the wire 240 is fitted securely during normal use and can be prevented from being disengaged.

In the fifth example, use of the metal wire 240 makes the hood hinges 218 compact and lightweight and facilitates production and tuning of tensile force.

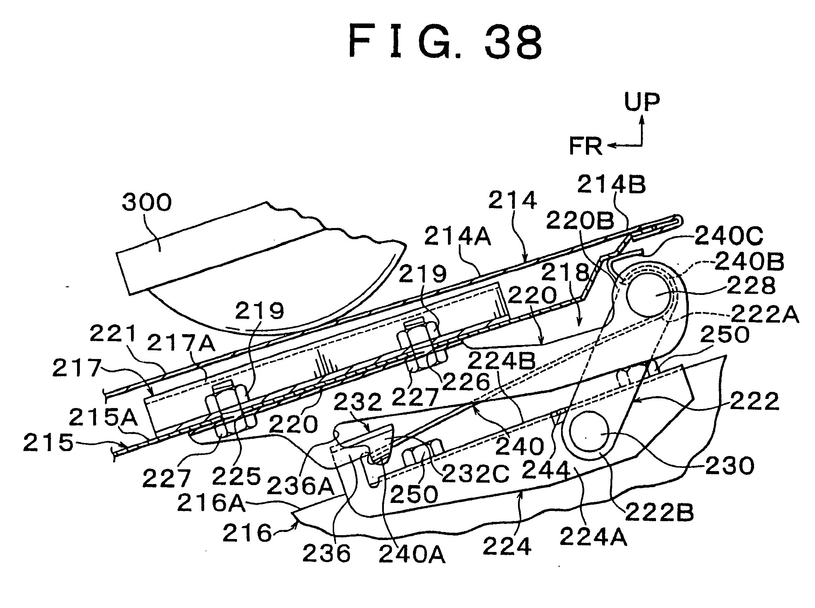

As shown in Fig. 38, the rear end portion of the wire 240 in the hood hinges 218 of the fourth example may be curved into the shape of "S", as is the case with the rear end portion of the wire 240 of the fifth example.

### (Sixth explanatory example)

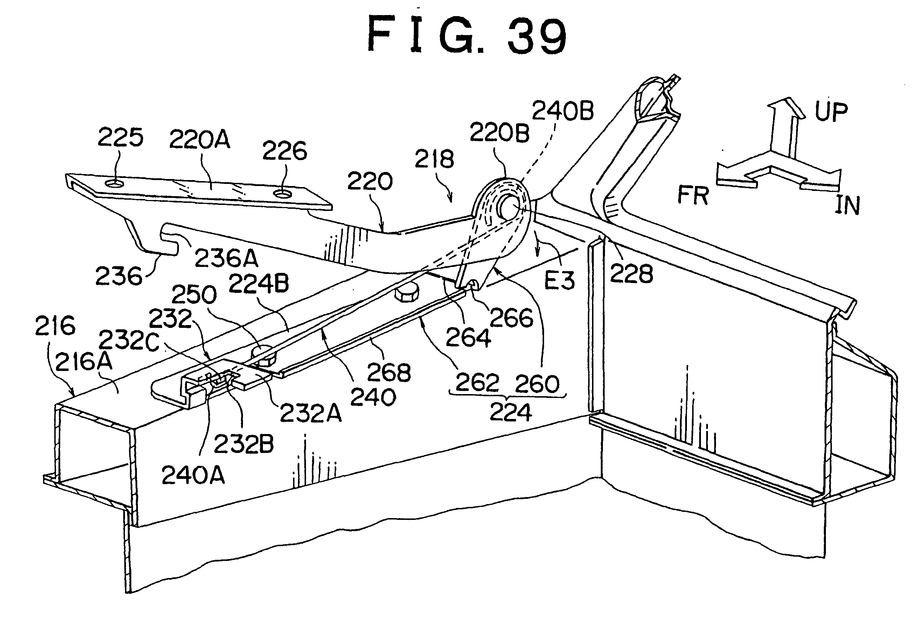

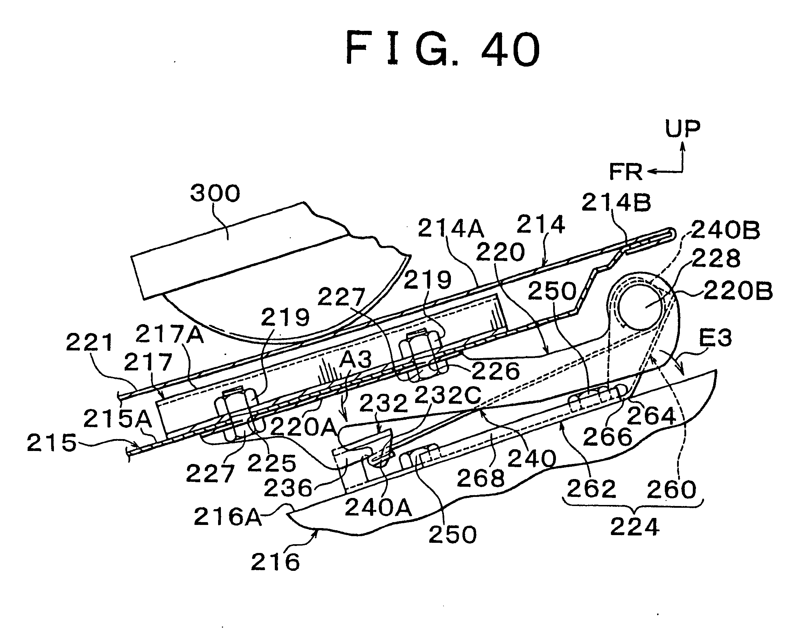

Next, a vehicular hood hinge structure according to a sixth explanatory example will be described with reference to Figs. 39 and 40.

Members identical with those of the fourth example are denoted by the same reference numerals, and the description thereof will be omitted.

As shown in Fig. 39, instead of the link 222 of the fourth example, a link portion 260 that is extended diagonally upwards and backwards is formed together with the rear end portion of the base plate 224. A portion of the base plate 224 other than the link portion 260 constitutes a base portion 262. A recess 266 is formed in a bent portion 264 from inside and laterally with respect to the vehicle. The bent portion 264 is a border between the base portion 262 and the link portion 260. Therefore, the link portion 260 is likely to rotate downwards (as indicated by an arrow E3 shown in Fig. 39) around the bent portion 264. A flange portion 268 directed upwards is formed in the base portion 262 at its laterally inward end portion.

Next, operation of the sixth example will be described.

In the sixth example, as is the case with the fourth example, if the magnitude of the load applied to the hood hinges 218 from the hood 214 is smaller than the first predetermined value, the pin 228 as a rotation center of the hood 214 is held in a hold position shown in Fig. 39 due to a tensile force of the wire 240. Therefore, it is possible to make it unlikely for the rotation center of the hood 214 to fluctuate when it is normally opened and closed. Thus, operability of the hood 214 is improved.

On the other hand, as shown in Fig. 40, if the impacting object 300 has come into abutment on the hood 214 at a portion that faces the front portion of one of the hood hinges 218 during a running state of the vehicle or the like as shown in Fig. 40 and if the magnitude of the load applied to the hood hinge 218 from the hood 214 has become equal to or greater than the first predetermined value, the outer panel 221 comes into abutment on the reinforcement 217 and the front portion of the hood hinge arm 220 of the hood hinge 218 makes a downward stroke (as indicated by an arrow A3 shown in Fig. 40). Therefore, the claw portion 36 of the hood hinge arm 220 is displaced downwards, and the hook portion 240A of the wire 240 is pushed out downwards by the claw portion 36 and is disengaged from the grapple portion 232C.

As a result, the pin 228 and the link portion 260 rotate downwards (as indicated by an arrow E3 shown in Fig. 40) around the bent portion 264, and the hood hinge arm 220 supported by the pin 228 is displaced downwards (as indicated by the arrow A3 shown in Fig. 40). The hood 214 itself is supported by one of the hood hinges 218 that is opposite the other hood hinge 218 in which the hook portion 240A of the wire 240 has been disengaged from the grapple portion 232C, the hood striker 201, the hood lock 202, and the hood stoppers for the apron upper members 216. Therefore, if the hook portion 240A has been disengaged from the grapple portion 232C, the hood hinge arm 220 is displaced downwards (as indicated by the arrow A3 shown in Fig. 40), and the hood 214 is deformed due to a load from the impacting object 300 while absorbing impact energy. Thus, the distance to be covered by the hood 214 before its bottom touches the hood hinges 218 and the apron upper members 216 becomes longer, and the amount of deformation of the hood 214 is increased. The load applied to the impacting object 300 is reduced by an amount corresponding to the increase in deformation amount of the hood 214.

In the sixth example, instead of the link 222 of the fourth example, the link portion 260 is formed together with the rear end portion of the base plate 224. Thus, the hood hinge structure of the sixth example is simple and can be manufactured easily.

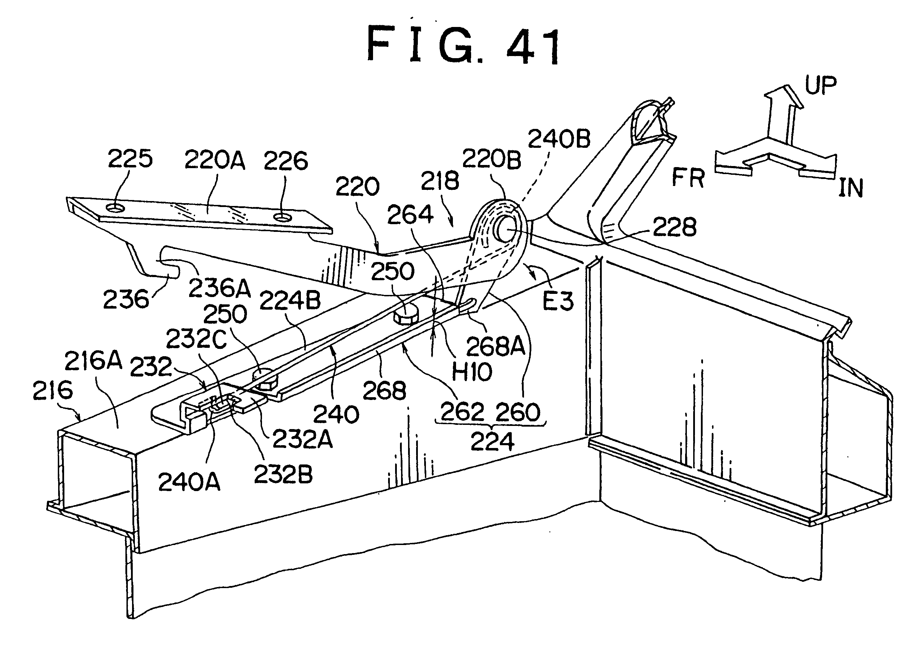

In the sixth example, the recess 266 is formed in the bent portion 264 that is the border between the base portion 262 and the link portion 260, from inside and laterally with respect to the vehicle. Instead, however, as shown in Fig. 41, a portion 268A obtained by reducing a height H10 of the flange portion 268 that is formed in the base portion 262 at its laterally inward end portion in such a manner as to be directed upwards may be formed in the bent portion 264 so as to realize a construction in which the link portion 260 is likely to rotate downwards (as indicated by an arrow E3 shown in Fig. 41) around the bent portion 264.

### (Seventh example)

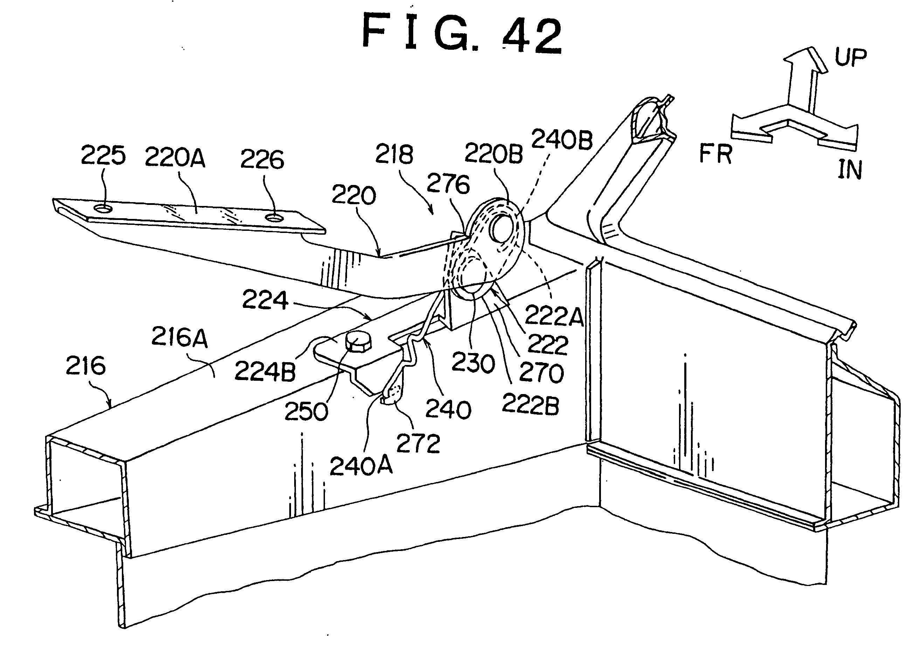

Next, a vehicular hood hinge structure according to a seventh explanatory example will be described with reference to Figs. 42 to 44.

Members identical with those of the fourth example are denoted by the same reference numerals, and the description thereof will be omitted.

As shown in Fig. 42, a fitting bracket portion 270 that is extended upwards from the upper wall portion 216A of each of the apron upper members 216 is formed in the base plate 224 at its rear portion. The link 222 is rotatably pivoted on the fitting bracket portion 270, by means of the pin 230. A hook portion 272 that is extended downwards from the upper wall portion 216A of each of the apron upper members 216 is formed in the base plate 224 at its front portion. The hook portion 240A of the wire 240 is engaged with the hook portion 272.

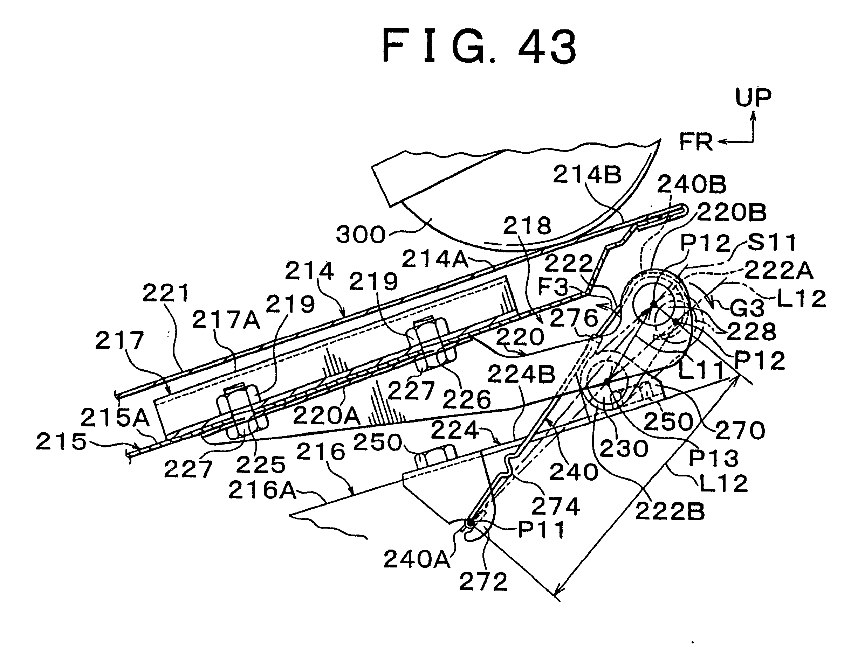

As shown in Fig. 43, a spring portion 274 that is flexed undulately as a flexible portion is formed in the wire 240 at its middle portion. The spring portion 274 is stretched if a tensile force is applied to the wire 240. A stopper portion 276 is formed in the fitting bracket portion 270 at its upper end portion. The link 222 abuts on the stopper portion 276, whereby it is prevented from rotating forwards (as indicated by an arrow F3 shown in Fig. 43) due to the tensile force applied to the wire 240.

A center P13 of the pin 230 is slightly offset downwards with respect to a line S11 that connects an engagement point P11 between the wire 240 and the hook portion 272 of the base plate 224 with a center P12 of the pin 228. A distance L11 between the centers P12, P13 is set so as to be shorter than a distance L12 between the engagement point P11 and the center P12.

Thus, if the hood 214 has been displaced downwards for some reason, the pin 228 on the link 222 rotates downwards (as indicated by an arrow G3 shown in Fig. 43) around the pin 230. At that moment, the spring portion 274 is extended, and the wire 240 is thereby stretched to a maximum extent when the pin 228 is displaced to a position indicated by a two-dot chain line L12 shown in Fig. 43, i.e., a position where the engagement point P11 and the centers P12, P13 are aligned (a position where the center P12 is a recovery critical point). If the magnitude of the load applied to the hood hinges 218 from the hood 214 is smaller than a second predetermined value (T2) and if the center P12 of the pin 228 is not beyond the recovery critical point indicated by the two-dot chain line L12, the link 222 returns to its original hold position due to a spring effect of the wire 240. The second predetermined value (T2) is equal to or greater than the magnitude of the load at the time when the rotation center of the hood starts rotating (the first predetermined value (T1)) (T2>T1). On the other hand, if the magnitude of the load applied to the hood hinges 218 from the hood 214 has become equal to or greater than the second predetermined value (T2) and if the center P12 of the pin 228 has gone beyond the recovery critical point indicated by the two-dot chain line L12, the link 222 is likely to fall downwards (as indicated by the arrow G3 shown in Fig. 43) by rotating around the pin 230 due to a spring effect of the wire 240.

Operation of the seventh example will be described.

In the seventh example, if the magnitude of the load applied to the hood hinges 218 from the hood 214 is smaller than the first predetermined value (T1), the pin 228 as a rotation center of the hood 214 is held in a hold position shown in Fig. 43. Therefore, it is possible to make it unlikely for the rotation center of the hood 214 to fluctuate when it is normally opened and closed. Thus, operability of the hood 214 is improved.

On the other hand, if the hood 214 has been pressed manually and if the magnitude of the load applied to the hood hinges 218 from the hood 214 has become equal to or greater than the first predetermined value (T1) and smaller than the second predetermined value (T2), the pin 228 on the link 222 rotates downwards (as indicated by the arrow G3 shown in Fig. 43) around the pin 230. However, since the center P12 of the pin 228 is not beyond the recovery critical point indicated by the two-dot chain line L12, the link 222 returns to its original position due to a spring effect of the wire 240.

If the impacting object 300 has come into abutment on the hood 214 at a portion that faces the rear portion of one of the hood hinges 218 during a running state of the vehicle or the like and if the magnitude of the load applied to the hood hinge 218 from the hood 214 is equal to or greater than the first predetermined value (T1) and smaller than the second predetermined value (T2), the pin 228 on the link 222 rotates downwards (as indicated by the arrow G3 shown in Fig. 43) around the pin 230. However, since the center P12 of the pin 228 is not beyond the recovery critical point indicated by the two-dot chain line L12 shown in Fig. 43, the link 222 returns to its original position due to a spring effect of the wire 240. At this moment, since the entire hood 214 is slightly displaced downwards, the load applied to the impacting object 300 can be reduced at an early stage of impact.

If the impacting object 300 has come into abutment on the hood 214 at a portion that faces the rear portion of one of the hood hinges 218 and if the magnitude of the load applied to the hood hinge 218 from the hood 214 has become equal to or greater than the second predetermined value (T2), the center P12 of the pin 228 is beyond the recovery critical point indicated by the two-dot chain line L12 shown in Fig. 43, and the link 222 becomes likely to fall downwards (as indicated by the arrow G3 shown in Fig. 43) around the pin 230 due to a spring effect of the wire 240. The hood 214 itself is supported by one of the hood hinges 218 that is opposite the other hood hinge 218 that has been impacted by the impacting object 300, the hood striker 201, the hood lock 202, and the hood stoppers for the apron upper members 216. Therefore, even if the center P12 of the pin 228 has gone beyond the recovery critical point indicated by the two-dot chain line L12 shown in Fig. 43 or even if the spring effect of the wire 240 has been exercised on the hood 214, the hood 214 is hardly displaced downwards merely by the spring effect.

Thus, if the center P12 of the pin 228 has gone beyond the recovery critical point, the hood hinge arm 220 is displaced downwards (as indicated by the arrow G3 shown in Fig. 43) and the hood 214 is deformed due to a load from the impacting object 300 while absorbing impact energy. Thus, the distance to be covered by the hood 214 before its bottom touches the hood hinges 218 and the apron upper members 216 becomes longer, and the amount of deformation of the hood 214 is increased. The load applied to the impacting object 300 is reduced by an amount corresponding to the increase in deformation amount of the hood 214.

In the seventh example, an elastic region of the wire 240 can be set freely by providing the wire 240 with the spring portion 274. Until the center P12 of the pin 228 goes beyond the recovery critical point, impact energy is absorbed through elastic deformation of the spring 274. The load applied to the impacting object 300 is reduced also by the spring portion 274.

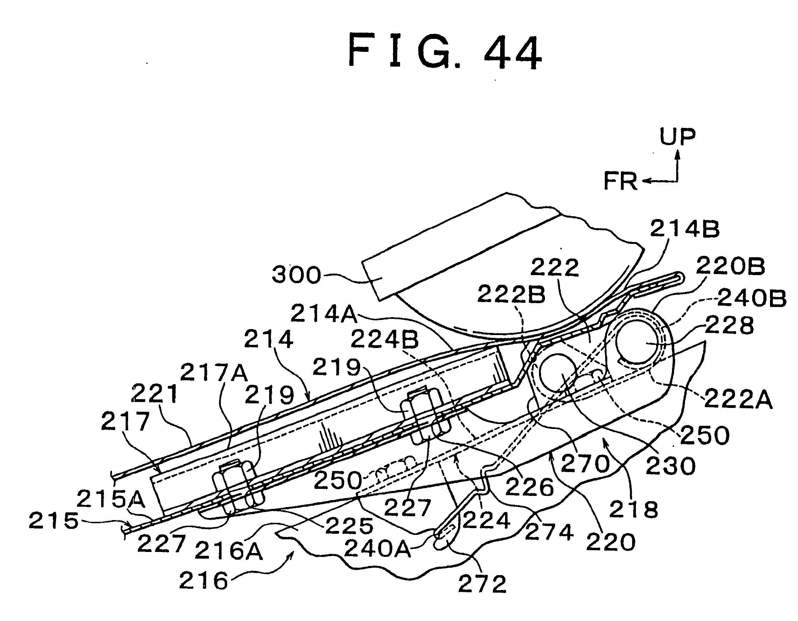

If the impacting object 300 has impacted the hood 214 at an upper portion that does not face the fitting bracket portions 270, the hood 214 does not interfere with the fitting bracket portions 270. Thus, the entire hood 214 can be displaced further downwards with respect to a position shown in Fig. 44.

In the seventh example, since the wire 240 connects the hook portion 272 of the base plate 224 with the link 222, the link 222 can be surely supported by the wire 240. If the magnitude of the load applied from the hood 214 has reached the predetermined value (T1), the link 222 surely falls rotationally.

In the seventh example, since the wire 240 applies a tensile force that is substantially proportional to its own weight to the link 222 in advance. Thus, the wire 240 is fitted securely during normal use and can be prevented from being disengaged.

In the seventh example, use of the metal wire 240 makes the hood hinges 218 compact and lightweight and facilitates production and tuning of tensile force.

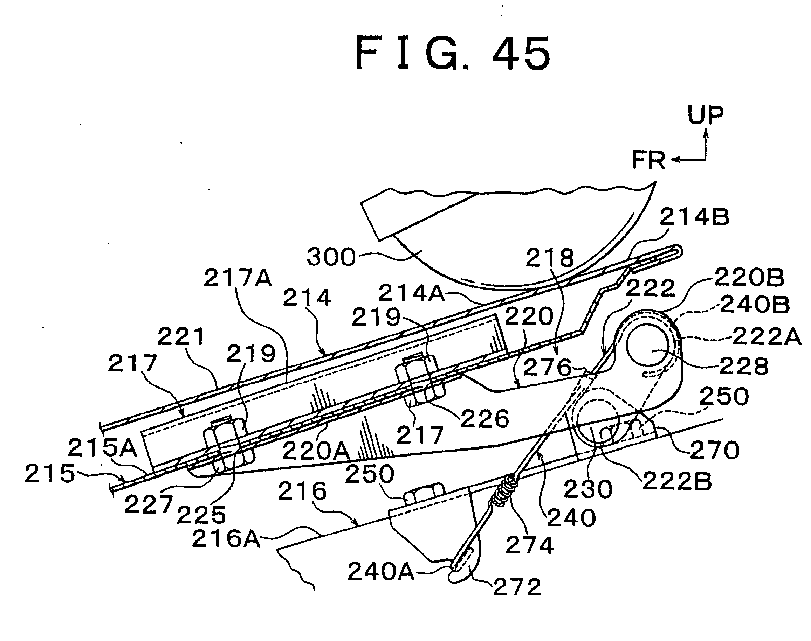

In the seventh example, the spring portion 274 that is flexed undulately is formed in the wire 240 at its middle portion. However, the spring portion 274 may not be undulated and take another shape such as a spiral shape as shown in Fig. 45.

In the fourth to seventh examples, other members such as a metal plate member, a resinous wire, a resinous plate member, a connecting member made from an elastic material such as rubber, and so on may be employed instead of the metal wire 240. It is also possible to dispense with the positioning claw 244 and the stopper portion 276 and adopt a construction in which the tensile force applied to the wire 240 is equal to the weight of the hood 214.

As in the second example, it is also possible to adopt a construction in which the link is engaged with the base plate and in which the link is disengaged and falls rotationally if a load of a predetermined value or more has been applied thereto.

As a matter of course, the first predetermined value (the magnitude of the load applied from the hood) may be different among the fourth to seventh examples.

In the first embodiment to the third embodiment, the hood hinge structures doesn't require the obstacle detecting means and the actuator as described in Fig.46, and can hold the rotation center of the hood at the determined position or in the determined orbit when the hood is normally opened and closed. As a result, the embodiments are simple and compact in structures, and are advantageous in that the rotation center of the hood aren't likely to be displaced.

Although the invention has been described hereinbefore in detail as to specific embodiments thereof, the invention is only limited to those embodiments and that are covered by the claims. For example, it is possible that one of the embodiments is combined with the hood hinge structure requiring the obstacle detecting means and the actuator.

## Claims

1. A vehicular hood hinge structure, comprising:
a load transformation device that transforms a peak load applied from above a vehicle into a plurality of successive reduced load peaks by means of a plurality of load absorbing means (142, 161, 164, 170, 172, 182), **characterized in that** the load absorbing means (142, 161, 164, 170, 172, 182) is provided at least partially in a link (118, 120, 160) of the hood hinge, having a first (120) and a second (118) arm rotating downward under the load operating the load absorbing means in accordance with differences in direction and speed of the first (120) and second (118) arm.

2. The vehicular hood hinge structure according to claim 1, wherein the reduced load peaks in the load absorbing means (142, 161, 164, 170, 172, 182) succeed each other with increasing displacement of the hood.

3. The vehicular hood hinge structure according to claim 1, wherein:
the load absorbing means is arranged at a plurality of links, said load absorbing means abutting on each other and being deformable.

4. The vehicular hood hinge structure according to claim 3, wherein:
one portion of the load absorbing means that abuts on the other portion thereof comprises a plurality of cut-up portions (142); and
the other portion of the load absorbing means comprised a bead portion (144),
the cut-up portions (142) abuts on the bead portion (144).

5. The vehicular hood hinge structure according to claim 3, wherein:
one portion of the load absorbing means that abuts on the other portion thereof comprises an overhang portion (152); and
the other portion of the load means comprises a receiving face (154), and wherein
at least one of the overhang portion (152) and the receiving face (154) is provided with frictional force generating means (158).

6. The vehicular hood hinge structure according to any one of claims 1 or 2, wherein:
the load absorbing means can adjust a vertical mounting position of the hood (110).

7. The vehicular hood hinge structure according to claim 6, wherein:
the load absorbing means has a long hole (180) that is formed in the first link (120) longitudinally and a plurality of stoppers (182) that are disposed in the long hole (180) and that can abut on the second link (118), said stoppers (182) being adapted to be cut for absorbing load.

## Patentansprüche

1. Fahrzeughaubenscharnieraufbau, der Folgendes aufweist:
eine Lastumwandlungsvorrichtung, die eine Spitzenlast, die von oben auf ein Fahrzeug aufgebracht ist, in eine Vielzahl von aufeinanderfolgenden verringerten Lastspitzen mittels einer Vielzahl von lastabsorbierenden Einrichtungen (142, 161, 164, 170, 172, 182) umwandelt,
**dadurch gekennzeichnet, dass**
die lastabsorbierende Einrichtung (142, 161, 164, 170, 172, 182) wenigstens teilweise in einem Verbindungselement (118, 120, 160) des Haubenscharniers vorgesehen ist, welches einen ersten (120) und einen zweiten (118) Arm aufweist, die sich unter der Last nach unten drehen, die die lastabsorbierte Einrichtung in Übereinstimmung mit Unterschieden in einer Richtung und einer Geschwindigkeit des ersten (120) und des zweiten (118) Arms betätigt.

2. Fahrzeughaubenscharnieraufbau nach Anspruch 1, wobei die verringerten Lastspitzen in der lastabsorbierenden Einrichtung (142, 161, 164, 170, 172, 182) mit zunehmender Verschiebung der Haube aufeinander folgen.

3. Fahrzeughaubenscharnieraufbau nach Anspruch 1, wobei:
die lastabsorbierende Einrichtung an einer Vielzahl von Verbindungselementen angeordnet ist, wobei die lastabsorbierenden Einrichtungen aneinander angrenzen und deformierbar sind.

4. Fahrzeughaubenscharnieraufbau nach Anspruch 3, wobei:
ein Abschnitt der lastabsorbierenden Einrichtung, der an deren anderen Abschnitt angrenzt, eine Vielzahl von Angriffsabschnitten (142) aufweist; und
der andere Abschnitt der lastabsorbierenden Einrichtung einen Sickenabschnitt (144) aufweist,
wobei die Angriffsabschnitte (142) an den Sickenabschnitt (144) angrenzen.

5. Fahrzeughaubenscharnieraufbau nach Anspruch 3, wobei:
ein Abschnitt der lastabsorbierenden Einrichtung, der an deren anderen Abschnitt angrenzt, einen Überhangabschnitt (152) aufweist; und
der andere Abschnitt der Lasteinrichtung eine Aufnahmefläche (154) aufweist, und wobei
wenigstens einer von dem Überhangabschnitt (152) und der Aufnahmefläche (154) mit einer Reibungskrafterzeugungseinrichtung (158) versehen ist.

6. Fahrzeughaubenscharnieraufbau nach einem der Ansprüche 1 oder 2, wobei:
die lastabsorbierende Einrichtung eine vertikale Montageposition der Haube (110) einstellen kann.

7. Fahrzeughaubenscharnieraufbau nach Anspruch 6, wobei:
die lastabsorbierende Einrichtung ein Langloch (180) aufweist, das in dem ersten Verbindungselement (120) in der Längsrichtung ausgebildet ist, und eine Vielzahl von Stoppern (182) aufweist, die in dem Langloch (180) angeordnet sind und die an dem zweiten Verbindungselement (118) angrenzen können, wobei die Stopper (182) angepasst sind, um zum Absorbieren einer Last abgeschnitten zu werden.

## Revendications

1. Structure de charnière pour capot de véhicule, comprenant :
un dispositif de transformation de charge qui transforme une charge de pointe appliquée depuis le dessus du véhicule en une pluralité de pointes de charge réduites successives au moyen d'une pluralité de moyens (142, 161, 164, 170, 172, 182) d'absorption de charge, **caractérisée en ce que** les moyens (142, 161, 164, 170, 172, 182) d'absorption de charge sont disposés au moins partiellement dans une articulation (118, 120, 160) de la charnière de capot, comportant un premier (120) et un second (118) bras tournant vers le bas sous la charge en mettant en oeuvre le moyen d'absorption de charge en fonction de différences de direction et de vitesse du premier (120) et du second (118) bras.

2. Structure de charnière pour capot de véhicule selon la revendication 1, dans laquelle les pointes de charge réduites dans les moyens (142, 161, 164, 170, 172, 182) d'absorption de charge se succèdent les unes les autres avec l'accroissement du déplacement du capot.

3. Structure de charnière pour capot de véhicule selon la revendication 1, dans laquelle les moyens d'absorption de charge sont agencés au niveau d'une pluralité d'articulations, lesdits moyens d'absorption de charge étant en butée les uns sur les autres et étant déformables.

4. Structure de charnière pour capot de véhicule selon la revendication 3,
dans laquelle une portion du moyen d'absorption de charge qui est en butée sur l'autre portion de celui-ci comprend une pluralité de portions découpées (142) ; et
l'autre portion du moyen d'absorption de charge comprend une portion renflée (144),
dans laquelle les portions découpées (142) butent sur la portion renflée (144).

5. Structure de charnière pour capot de véhicule selon la revendication 3,
dans laquelle une portion du moyen d'absorption de charge qui est en butée avec l'autre portion de celui-ci comprend une portion (152) en saillie ; et
l'autre portion du moyen d'absorption de charge comprend une face (154) de réception, et
dans laquelle au moins l'une de la portion (152) en saillie et de la face (154) de réception est pourvue d'un moyen (158) générateur de forces de frottement.

6. Structure de charnière pour capot de véhicule selon l'une quelconque des revendications 1 ou 2, dans laquelle le moyen d'absorption de charge peut ajuster la position verticale de montage du capot (110).

7. Structure de charnière pour capot de véhicule selon la revendication 6, dans laquelle le moyen d'absorption de charge comporte un trou allongé (180) qui est formé longitudinalement dans la première articulation (120) et une pluralité de butoirs (182) qui sont disposés dans le trou allongé (180) et qui peuvent buter sur la seconde articulation (118), lesdits butoirs (182) étant susceptibles de se casser pour absorber une charge.
